(19)

Europäisches Patentamt

European Patent Office

Office européen des brevets

(11) **EP 4 502 018 A1**

(12) **EUROPEAN PATENT APPLICATION**
published in accordance with Art. 153(4) EPC

(43) Date of publication:
05.02.2025 Bulletin 2025/06

(21) Application number: 22935726.4

(22) Date of filing: 19.12.2022

(51) International Patent Classification (IPC):
$C08J\ 5/18$ (2006.01)    $B32B\ 15/08$ (2006.01)
$B32B\ 27/32$ (2006.01)    $H01G\ 4/32$ (2006.01)

(52) Cooperative Patent Classification (CPC):
B32B 15/08; B32B 27/32; C08J 5/18; H01G 4/32

(86) International application number:
PCT/JP2022/046637

(87) International publication number:
WO 2023/188598 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.03.2022 JP 2022055758

(71) Applicant: Toray Industries, Inc.
Tokyo 103-8666 (JP)

(72) Inventors:
• TATSUKI, Toshiumi
  Otsu-shi, Shiga 520-8558 (JP)
• OHKURA, Masatoshi
  Otsu-shi, Shiga 520-8558 (JP)
• IMANISHI, Yasuyuki
  Otsu-shi, Shiga 520-8558 (JP)

(74) Representative: Mewburn Ellis LLP
Aurora Building
Counterslip
Bristol BS1 6BX (GB)

(54) **POLYPROPYLENE FILM, METAL MEMBRANE LAYERED FILM USING SAME, AND FILM CAPACITOR**

(57)    The present invention addresses a problem of providing a polypropylene film that has excellent voltage resistance characteristics and reliability in a high-temperature environment and is suitable for capacitor applications or the like used under a high temperature and a high voltage. Provided is a polypropylene film including a cyclic olefin resin, in which in a case where a strength in a main orientation direction measured at 23°C is F(A23) and a strength in a main orientation orthogonal direction measured at 23°C is F(B23), F(A23) + F(B23) is 120 MPa or more and 1000 MPa or less, and a shrinkage rate in the main orientation direction measured at 150°C is -2.0% or more and 3.0% or less.

Fig. 1

**Description**

TECHNICAL FIELD

The present invention particularly relates to a polypropylene film suitably used for film capacitor applications.

BACKGROUND ART

Recently, inverters are introduced into most of electric facilities, and it is increasingly required to downsize film capacitors as well as increase the capacitance of film capacitors. In particular, in response to the demand, in applications for transportation such as automobiles (including electric automobiles and hybrid cars applications), solar power generation, and wind power generation, a film for a film capacitor is required to be further thinned and improved in heat resistance in addition to be improved in voltage resistance and maintained in productivity and processing suitability during capacitor element production.

A polypropylene film is considered to be excellent in heat resistance and dielectric breakdown voltage as a dielectric for the film capacitor. Meanwhile, in application to the above-mentioned fields, it is important for the film to exhibit excellent dimensional stability at a use environmental temperature and stable electrical performance (such as voltage resistance) in a region of 10°C to 20°C higher than the use environmental temperature. From a viewpoint of heat resistance, in a case of considering power semiconductor applications using silicon carbide (SiC) in the future, the use environmental temperature is expected to be higher.

From such background, the film capacitor is required to have further improved heat resistance and voltage resistance, and the film for the film capacitor is required to have an improved dielectric breakdown voltage in a high-temperature environment exceeding 110°C. However, as described in Non-Patent Document 1, an upper limit of an operating temperature of the polypropylene film is said to be about 110°C, and it is extremely difficult to stably maintain the dielectric breakdown voltage of the polypropylene film under such temperature environment.

In order to downsize the film capacitor and improve the heat resistance thereof, it is conceivable to use a film having a reduced film thickness and a high relative permittivity, and to use a film made from a resin component having a glass transition temperature exceeding a use environmental temperature range of the film capacitor or including such resin component. For example, there has been proposed a laminate having a multi-layer structure in which two types of layers having different relative permittivities are alternately superposed, one layer being a cyclic olefin resin layer having a glass transition temperature of more than 130°C, and the other layer being a polypropylene layer, whereby the laminate can maintain a large electrostatic capacitance while having the heat resistance and the voltage resistance (for example, Patent Document 1).

Further, there has been proposed a film having processability improved by co-extrusion and co-stretching during formation of a laminate of the cyclic olefin resin and the polypropylene (for example, Patent Documents 2 and 3). Moreover, there has been proposed a film having thermal dimensional stability in a high-temperature environment improved by blending the cyclic olefin resin and a polypropylene resin, forming a film, and biaxially stretching the film (for example, Patent Document 4).

PRIOR ART DOCUMENTS

PATENT DOCUMENTS

Patent Document 1: Japanese Patent Laid-open Publication No. 2015-012076
Patent Document 2: International Publication WO 2017/022706 Pamphlet
Patent Document 3: Japanese Patent Laid-open Publication No. 2018-034510
Patent Document 4: Japanese Patent Laid-open Publication No. 2020-521867

NON-PATENT DOCUMENT

Non-Patent Document 1: MOTONOBU KAWAI: "Film Capacitor Breakthrough, from Car to Energy", NIKKEI ELECTRONICS, Nikkei BP, 17 September 2012, p. 57-62

## SUMMARY OF THE INVENTION

### PROBLEMS TO BE SOLVED BY THE INVENTION

However, since the film of Patent Document 1 is not a co-extruded multi-layer but a laminate in which the cyclic olefin resin layer is formed on the polypropylene film by a coating method, the cyclic olefin resin layer is easily separated, and it is difficult to say that the performance and reliability of the film as the film capacitor are sufficient.

In the film of Patent Document 2, since a base layer portion of a multi-layer configuration is a single cyclic olefin resin, it is difficult to increase an area stretch ratio thereof, and it is difficult to say that the performance and the reliability of the film as the film capacitor are sufficient, for example, the voltage resistance in the high-temperature environment is insufficient.

In the film of Patent Document 3, a base layer portion of a multi-layer configuration is the cyclic olefin resin, and an elastomer is included to increase an area stretch ratio thereof. However, the film is not satisfactory in the voltage resistance in the high-temperature environment, and it is also difficult to say that the performance and the reliability of the film as the film capacitor are sufficient.

Since the film of Patent Document 4 is merely a film obtained by blending the cyclic olefin resin having a high glass transition temperature with the polypropylene resin, when the film is thinned by increasing the area stretch ratio, the film may be broken in a production step or a processing step, or voids may be formed and the voltage resistance in the high-temperature environment may be insufficient. As a result, it is difficult to say that the performance and the reliability of the film as the film capacitor are sufficient. Moreover, when the film is stretched at a higher area stretch ratio, there is also a problem that the dimensional stability for a long period is insufficient, and a risk of shape deformation increases in a case where the film is used as the film capacitor.

Therefore, an object of the present invention is to provide a polypropylene film which is excellent in voltage resistance characteristics in a high-temperature environment, dimensional stability, reliability and processability in a case of being used in a film capacitor, and suitable for being used as the film capacitor or the like that can be used for a long period of time under a high temperature and a high voltage.

### SOLUTIONS TO THE PROBLEMS

The present inventors have extensively conducted studies for solving the above problems, and resultantly made a polypropylene film including a cyclic olefin resin, in which in a case where a strength in a main orientation direction measured at 23°C is F(A23) and a strength in a main orientation orthogonal direction measured at 23°C is F(B23), F(A23) + F(B23) is 120 MPa or more and 1000 MPa or less, and a shrinkage rate in the main orientation direction measured at 150°C is -2.0% or more and 3.0% or less.

### EFFECTS OF THE INVENTION

According to the present invention, it is possible to provide the polypropylene film which is excellent in the voltage resistance characteristics and the reliability in the high-temperature environment and suitable for being used as the film capacitor or the like that can be used for a long period of time under the high temperature and the high voltage.

### BRIEF DESCRIPTION OF THE DRAWINGS

Fig. 1 is a schematic view illustrating a rectangle in a size of 1 um * 2 um defined in a section X of a polypropylene film of the present invention such that a pair of short sides of the rectangle are parallel to a thickness direction, and domains of a cyclic olefin resin passing through the pair of short sides of the rectangle.

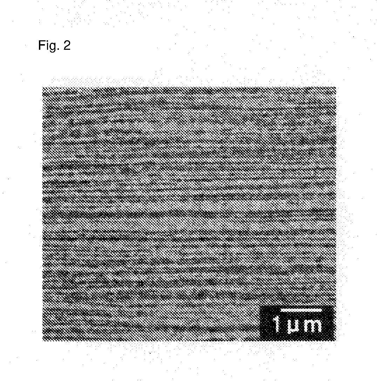

Fig. 2 is an enlarged photograph (magnification: 2,000x) of the section X of the polypropylene film according to one embodiment (an aspect of Example 5) of the present invention.

### EMBODIMENTS OF THE INVENTION

The present inventors have intensively studied to solve the above problems and considered a reason why the films described in Patent Documents 1 to 4 described above have insufficient dielectric breakdown voltages under the high-temperature environment and insufficient voltage resistance characteristics, reliability, and processability under the high-temperature environment in the case of being formed into the film capacitor as follows.

In other words, since the film of Patent Document 1 is an unstretched film laminated by the coating method, it has been considered that there are problems that separation occurs between layers in the high-temperature environment, the film is easily ruptured during capacitor element processing due to insufficient mechanical characteristics, particularly rupture elongation, and a withstand voltage of the film in the high-temperature environment is lowered. Assuming the voltage resistance in the high-temperature environment, in the films of Patent Documents 2 and 3, it has been considered that there is a problem that longitudinal stretch ratios of the films during formation of the films are both not necessarily sufficient, and a large amount of movable amorphous components are present in the films, so that the dielectric breakdown voltages at a high temperature are lowered. Also in the film of Patent Document 4, assuming the voltage resistance in the high-temperature environment, a degree of mixing of the cyclic olefin resin and the polypropylene resin is not sufficient. Therefore, it has been considered that, in a case where the area stretch ratio during the film formation is sufficiently increased, voids are formed at an interface, and the dielectric breakdown voltage at the high temperature is lowered, which is a problem. Further, it has been considered that there is also a problem that slipperiness and a tensile strength of the film are lowered due to formation of coarsened domains, and particularly when the film is thinned, the film is easily ruptured in processing steps such as vapor deposition, slitting, element winding, and pressing.

Based on the above considerations, the present inventors have further conducted studies, and found that the above problems can be solved by providing the polypropylene film including the cyclic olefin resin, in which in the case where the strength in the main orientation direction measured at 23°C is F(A23) and the strength in the main orientation orthogonal direction measured at 23°C is F(B23), F(A23) + F(B23) is 120 MPa or more and 1000 MPa or less, and the shrinkage rate in the main orientation direction measured at 150°C is -2.0% or more and 3.0% or less.

Hereinafter, the polypropylene film of the present invention will be specifically described. Note that, in a case where upper limits and lower limits of preferable ranges below are described separately, the limits can be arbitrarily combined.

Further, in the description, the polypropylene film may be simply referred to as a film below. Note that, since the polypropylene film of the present invention does not have a large number of pores for not being a microporous film. In other words, the polypropylene film of the present invention refers to a polypropylene film other than the microporous film. Here, the microporous film is defined as a film having a pore structure that penetrates both surfaces of the film and has air permeability of 5,000 sec/100 ml or less at a permeation time of 100 ml of air at 23°C and a relative humidity of 65% using a B-type Gurley tester of JIS P 8117 (1998).

From a viewpoint of a withstand voltage in the high-temperature environment, in the polypropylene film of the present invention, in the case where the strength in the main orientation direction measured at 23°C is F(A23) and the strength in the main orientation orthogonal direction measured at 23°C is F(B23), F(A23) + F(B23) is 120 MPa or more and 1000 MPa or less. From the above viewpoint, F(A23) + F(B23) is preferably 250 MPa or more, more preferably 350 MPa or more, and still more preferably 420 MPa or more. The polypropylene film of the present invention can be caused to have less movable amorphous components and exhibit high voltage resistance even at a high temperature by setting F(A23) + F(B23) to 120 MPa or more. F(A23) + F(B23) is preferably as high as possible from a viewpoint of voltage resistance, and is 1000 MPa or less from a viewpoint of feasibility.

The strength of the polypropylene film of the present invention at 23°C can be measured by the following procedure. First, a polypropylene film in a rectangular size of 10 mm * 150 mm (measurement direction) is subjected to a tensile test under conditions of an initial chuck-to-chuck distance of 20 mm, a temperature of 23°C, and a tensile speed of 300 mm/min. Next, the strength can be calculated by dividing a load when the polypropylene film is ruptured by a cross-sectional area (film thickness * width (10 mm)) of a sample before the test. Note that the tensile test can be performed by a publicly known tensile tester, and for example, "Tensilon" (registered trademark) UCT-100 manufactured by ORIENTEC CO., LTD. or the like can be suitably used.

A method of increasing F(A23) + F(B23) is not particularly limited, and examples thereof include a method in which biaxial stretching is performed when the polypropylene film is produced to increase stretch ratios in a machine direction and a transverse direction. The stretching may be performed by simultaneous biaxial stretching or sequential biaxial stretching, and preferably performed by the sequential biaxial stretching from a viewpoint of productivity. Here, the machine direction refers to a direction where the polypropylene film travels during the production step (in a film roll, a winding direction corresponds thereto), and the transverse direction refers to a direction orthogonal to the machine direction in a film plane. Further, F(A23) + F(B23) can also be increased by using a polypropylene resin having high stereoregularity as a raw material. For example, by using polypropylene having a high meso-pentad fraction, it is easy to increase F(A23) + F(B23).

Here, the polypropylene film refers to a sheet-shaped molded body containing the polypropylene resin as a main component, and the main component refers to a component contained in an amount of more than 50 mass% and 100 mass% or less in a case where a total amount of components constituting the film is 100 mass%. Note that, in a case where the film contains a plurality of types of components corresponding to the polypropylene resin, if the total amount of these components exceeds 50 mass%, the film contains the polypropylene resin as the main component even if an amount of each of the components is less than 50 mass%.

The polypropylene resin refers to a resin containing a propylene unit in an amount of more than 50 mol% and 100 mol% or less in a case where a total amount of constituent units constituting the resin is 100 mol%, and does not correspond to the cyclic olefin resin (to be described later).

Hereinafter, the main orientation direction in the polypropylene film of the present invention will be described. The main orientation direction refers to a direction where a polypropylene molecular chain orientation is the greatest. In a case where the biaxial stretching is performed in the production of the polypropylene film, the stretching is performed in the machine direction and the transverse direction, but in general, a direction where the stretch ratio is larger is a main orientation axis direction. In a case where stretching directions (the machine direction and the transverse direction) are specified but the stretch ratios are unknown, it is possible to measure a maximum load of the film until the film is ruptured in a tensile test at 23°C to be described later, and define a direction where a measured value of the maximum load is large as the main orientation axis direction.

As described above, if the stretching directions and the stretch ratios are known, the main orientation axis direction can be easily specified, but if the stretch directions and the stretch ratios are unknown, the main orientation axis direction can be specified by the following method. Specifically, a film is prepared and cut into a rectangle having a length of 50 mm and a width of 10 mm with an arbitrary direction directed upward to provide a sample <1>, and a long side direction of the sample <1> is defined as 0°. Next, a sample <2> having the same size is collected such that a long side direction of the sample is directed in a direction rotated rightward by 15° from a 0° direction. Hereinafter, samples <3> to <12> are collected in a similar manner by rotating long side directions of the samples in a rectangular shape by 15° each. Next, each of the samples in the rectangular shape is set in a tensile tester at an initial chuck-to-chuck distance of 20 mm such that the long side direction is a tensile direction, and a tensile test is performed at a tensile speed of 300 mm/min in an atmosphere at room temperature. In this case, a maximum load until each of the samples is ruptured is read, and a value obtained by dividing the maximum load by a cross-sectional area (film thickness * width) of each of the samples before the test is calculated as a stress of a maximum point strength. The long side direction of the sample having a maximum value is defined as a main orientation axis of the polypropylene film, and a direction orthogonal thereto is defined as a direction orthogonal to the main orientation axis of the polypropylene film.

In a case where a width of each of the samples is less than 50 mm and the above tensile test cannot be performed, a crystal orientation of an $\alpha$ crystal (110) plane by a wide-angle X-ray is measured as follows and defined as a film machine direction and a film transverse direction based on the following criteria. In other words, an X-ray (CuK$\alpha$ ray) is incident in a direction orthogonal to a film surface, and a crystal peak at $2\theta$ = about 14° ($\alpha$ crystal (110) plane) is scanned in a circumferential direction, it is also possible to define a direction where the obtained diffraction intensity of diffraction intensity distribution is the highest as the film transverse direction and the main orientation direction, and a direction orthogonal thereto is defined as a direction orthogonal to the machine direction and the main orientation direction.

The polypropylene film of the present invention has a shrinkage rate in the main orientation direction measured at 150°C of -2.0% or more and 3.0% or less from a viewpoint of improving the reliability when used in the film capacitor. From the above viewpoint, the shrinkage rate is preferably 1.5% or less, more preferably 1.0% or less, further preferably 0.5% or less, and particularly preferably 0.0% or less. In a case where the shrinkage rate is 0.0% or less, the smaller the absolute value, the better, and from the viewpoint of feasibility, the shrinkage rate is preferably -1.5% or more, and more preferably -1.0% or more. Note that a negative shrinkage rate means that the polypropylene film expands by heating.

If the shrinkage rate of the polypropylene film exceeds 3.0%, the polypropylene film tends to shrink under a high-temperature environment (for example, 135°C), and therefore when the polypropylene film is used in the film capacitor, the reliability of the film may be deteriorated.

In the polypropylene film of the present invention, the shrinkage rate at 150°C can be measured by the following method. First, a sample having a width of 10 mm and a length of 200 mm (measurement direction) is cut out, and marked at positions of 25 mm from both ends thereof to obtain a test piece having a test length of 150 mm ($l_0$). Next, the test piece is sandwiched between paper pieces, and heated for 15 minutes in an oven kept at 150°C without a load applied. Then, the test piece is taken out from the oven, cooled at the room temperature, a dimension ($l_1$) is measured, and the shrinkage rate is determined by the following equation.

$$\text{Shrinkage rate} = \{(I_0 - I_1)/I_0\} * 100 \, (\%).$$

As a method for setting the shrinkage rate to -2.0% or more and 3.0% or less, for example, it is effective to use a polypropylene resin having high stereoregularity and a high melting point (for example, a resin polypropylene resin having a high meso-pentad fraction and a high melting point), to set a preheating temperature immediately before stretching in the transverse direction after uniaxial stretching in the machine direction to 175°C or more, and to perform a relaxation treatment at a relaxation rate of more than 5% during a heat treatment step after biaxial stretching.

The polypropylene film of the present invention contains the cyclic olefin resin. The cyclic olefin resin refers to a resin containing a cyclic olefin unit in an amount of 10 mol% or more and 100 mol% or less in a case where a total amount of constituent units constituting the resin is 100 mol%. Note that, a resin containing a plurality of types of constituent units corresponding to the cyclic olefin unit corresponds to the cyclic olefin resin if the total amount of these constituent units exceeds 10 mol% even if the cyclic olefin resin unit is less than 10 mol%.

By containing the cyclic olefin resin, the polypropylene film has improved voltage resistance in the high-temperature environment due to high adhesion between the cyclic olefin resin having high heat resistance and the polypropylene resin. Therefore, the film capacitor using the polypropylene film of the present invention can maintain the voltage resistance even when used at a high temperature for a long time, and exhibits excellent reliability.

In the polypropylene film of the present invention, from a viewpoint of improving dispersion states of the cyclic olefin resin and the polypropylene resin, it is preferable to mix the cyclic olefin resin with the polypropylene resin (and further an antioxidant, if necessary) in advance and pre-knead a mixture thereof (hereinafter, sometimes referred to as compounding). For the compounding, a short-screw extruder, a twin-screw extruder, or the like can be used, but from viewpoints of a good dispersion state and high transparency, it is particularly preferable to use the twin-screw extruder. By making the dispersion states of the cyclic olefin resin and the polypropylene resin uniform, it is possible to suppress a local deterioration of voltage resistance due to a local increase in concentration of the cyclic olefin resin. Therefore, when the polypropylene film is used in the film capacitor, the reliability of the film capacitor can be increased, and deformation of the capacitor element can be reduced when the film is used at 135°C for a long time.

In the polypropylene film of the present invention, a lower limit of content of the cyclic olefin resin is preferably 1 mass%, more preferably 4 mass%, and still more preferably 7 mass% in the case where total content of the components constituting the film is 100 mass%. Meanwhile, the upper limit is preferably 39 mass%, more preferably 32 mass%, more preferably 25 mass%, more preferably 19 mass%, still more preferably 14 mass%, particularly preferably 9.5 mass%, and most preferably 9.0 mass% in the case where the total content of the components constituting the film is 100 mass%. If a content ratio of the cyclic olefin resin in the polypropylene film is too large, the area stretch ratio cannot be increased during the stretching, and the voltage resistance in the high-temperature environment may be deteriorated. Further, the cyclic olefin resin is generally more expensive than the polypropylene, and thus it is preferable to reduce the content thereof also from a viewpoint of economic efficiency. Meanwhile, if the content ratio of the cyclic olefin resin in the polypropylene film is insufficient, a structure stabilization effect depending on the cyclic olefin resin becomes insufficient, and the voltage resistance in the high-temperature environment and the reliability as the film capacitor may be lowered.

In the polypropylene film of the present invention, a developed area ratio Sdr of at least one surface is preferably 0.002% or more and 0.050% or less from the viewpoint of processability. The Sdr is a parameter that increases as protrusions on the surface become denser, and the Sdr increases as slipperiness of the surface of the polypropylene film increases.

In other words, since the Sdr of at least one surface is set to 0.002% or more, which improves the slipperiness of surface of the polypropylene film, the processability in a step of processing the polypropylene film as the dielectric for the film capacitor, for example, the vapor deposition, the slitting, the element winding, or the pressing is improved. From the above viewpoint, the Sdr of at least one surface is more preferably 0.005% or more, and still more preferably 0.010% or more.

Meanwhile, by setting the Sdr of at least one surface to 0.050% or less, the slipperiness of the surface of the polypropylene film is appropriately lowered, and it is easy to suppress winding deviation in a case where the film is formed into a wound body. From the above viewpoint, the Sdr of at least one surface is more preferably 0.035% or less.

Further, from a viewpoint of achieving both the processability and quality in the formation of the wound body, it is more preferable that the Sdrs of both surfaces are 0.002% or more and 0.050% or less or fall within the above preferable range. Note that the Sdr can be measured and calculated in accordance with ISO25178 (2012), and details thereof will be described later.

Since the polypropylene film of the present invention contains the polypropylene resin and the cyclic olefin resin, dense surfaces derived from phase separation can be formed. The Sdr can be adjusted by adjusting the raw material, a lamination ratio, a surface layer thickness, and stretching conditions. More specifically, by using a compounded resin raw material obtained by pre-kneading the cyclic olefin resin and the polypropylene resin with a twin-screw kneader, or by increasing the ratio of the raw material, a dispersion diameter of the cyclic olefin resin can be reduced, and as a result, the Sdr can be increased. Meanwhile, the Sdr can be reduced by increasing the stretch ratios in the machine direction and the transverse direction.

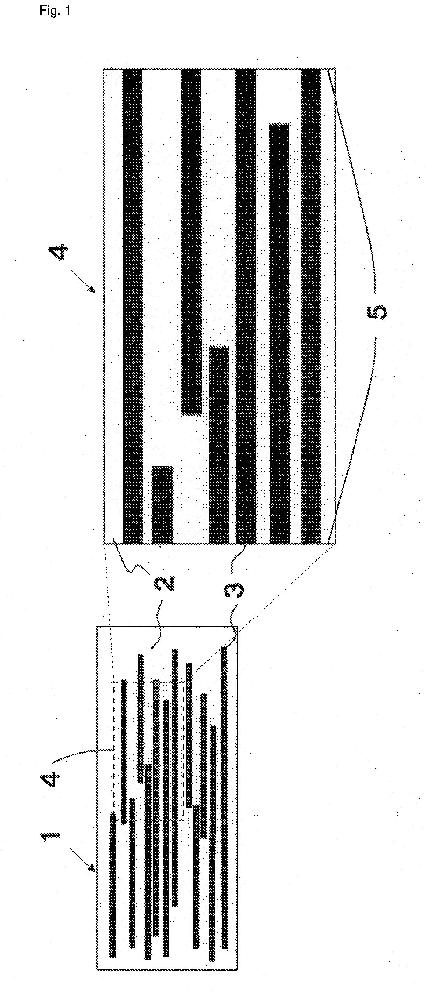

Hereinafter, a method of defining a rectangle in a size of 1 um * 2 um in the section X in the polypropylene film of the present invention such that a pair of short sides are parallel to the thickness direction and a method of determining the number of domains of the cyclic olefin resin passing through the pair of short sides of the rectangle will be described with reference to the drawings. Fig. 1 is the schematic view schematically illustrating the rectangle in the size of 1 um * 2 um defined in the section X of the polypropylene film of the present invention such that the pair of short sides of the rectangle are parallel to the thickness direction, and the domains of the cyclic olefin resin passing through the pair of sides of the rectangle. Signs 1 to 5 in Fig. 1 represent, in order, a part of the section X, a sea portion, island portions (domains), the rectangle in the size of 1 um * 2 um defined in the section X such that the pair of short sides are parallel to the thickness direction, and the pair of short sides parallel to the thickness direction. A view on the left of Fig. 1 is the part of the section X, and a view on the right is an enlarged view of the rectangle (an enlarged view of a broken line portion in Fig. 1 on the left) in the size of 1 um * 2 um defined such that the pair of short sides in the section X is parallel to the thickness direction. Note that, in the polypropylene film of the present invention, the sea portion is the polypropylene resin, and the island portion is cyclic olefin resin.

When the rectangle in the size of 1 um * 2 μm is defined in the section X such that the pair of short sides are parallel to the thickness direction, a base of the rectangle is set in the sea portion, and in a case where a domain is located on a side facing the base, the domain is considered to be absent and is not counted as the domains (in the example of Fig. 1, such domain does not exist).

Here, the "domains of the cyclic olefin resin passing through the pair of short sides parallel to the thickness direction" refer to domains of the cyclic olefin resin passing through both of the pair of short sides parallel to the thickness direction. In other words, in the example of Fig. 1 (view on the right), first and fourth to sixth domains from the top are applicable, and second and third domains from the top are not applicable. Therefore, the "domains of the cyclic olefin resin passing through the pair of short sides parallel to the thickness direction" in this example are four.

In a case where a section obtained by cutting the layer A on a surface parallel to the main orientation axis direction and the thickness direction is defined as the section X, in the rectangle in the size of 1 um * 2 um defined in the section X such that the pair of short sides are parallel to the thickness direction as illustrated in Fig. 1, the polypropylene film of the present invention preferably includes two or more domains of the cyclic olefin resin passing through the pair of short sides. In the polypropylene film of the present invention, the domains of the cyclic olefin resin passing through the pair of short sides parallel to the thickness direction are preferably four or more, and more preferably six or more. An upper limit of the number of the domains is not particularly limited but is set to 100, preferably 20.

By setting the number of the domains of the cyclic olefin resin passing through the pair of short sides parallel to the thickness direction to two or more, the cyclic olefin resin is finely dispersed in a flatter manner on the surface, high thermal stability of the cyclic olefin resin and high voltage resistance of the polypropylene resin can be reflected in the polypropylene film, and the dielectric breakdown voltage of the polypropylene film in the high-temperature environment can be increased. Moreover, in a case where such film is used in the film capacitor, short-circuit breakage hardly occurs even if the film is used for a long time in the high-temperature environment, the voltage resistance of the film capacitor is maintained, and high reliability can be obtained.

A method of keeping the number of the domains within a suitable range is not particularly limited, and in an extruder for extruding a resin including the cyclic olefin resin, it is effective to set a temperature of a filter to be lower than an extrusion temperature and to perform the biaxial stretching such that the area stretch ratio becomes 45 times or more.

The polypropylene film of the present invention more preferably contains a linear polypropylene resin (hereinafter, also referred to as a polypropylene resin (A)) as a main component from a viewpoint of moldability.

A lower limit of a number average molecular weight (Mn) of the polypropylene resin (A) is preferably 30,000, more preferably 40,000, and still more preferably 50,000. Meanwhile, an upper limit of the Mn is preferably 90,000, and more preferably 80,000. Setting the molecular weight of the polypropylene resin (A) within the above range can lighten deterioration of film formation stability, the strength, the dimensional stability, and the heat resistance of the film. Note that the number average molecular weight (Mn) can be measured by gel permeation chromatography (GPC).

A meso-pentad fraction of the polypropylene resin (A) is preferably 0.960 or more from a viewpoint of heat resistance when the resin is formed into the polypropylene film. From the above viewpoint, the meso-pentad fraction is more preferably 0.965 or more, still more preferably 0.970 or more, particularly preferably 0.975 or more, and most preferably 0.980 or more. The meso-pentad fraction is an index showing stereoregularity of a crystal phase of the polypropylene measured by a nuclear magnetic resonance method (NMR method). The polypropylene resin having a higher value has a higher degree of crystallinity and a higher melting point, and is suitable for use at a high temperature, which is preferable. An upper limit of the meso-pentad fraction is not particularly specified, but is 1.000 from the viewpoint of feasibility.

In order to obtain a resin having high stereoregularity as described above, for example, it is preferable to employ a method of washing resin powder obtained with a solvent such as n-heptane or a method of appropriately selecting a catalyst and/or a cocatalyst or a composition.

The polypropylene resin (A) preferably has a melting point of 160°C or more. The melting point is more preferably 161°C or more, still more preferably 162°C or more, particularly preferably 164°C or more, and most preferably 167°C or more. Since the polypropylene resin (A) has a melting point of 160°C or more, the deterioration of the voltage resistance in the high-temperature environment is lightened when the polypropylene resin is formed into a film.

The melting point of the resin is defined as a melting peak temperature obtained when the resin is heated from 30°C to 260°C at 20°C/min with a differential scanning calorimeter DSC, then cooled to 30°C at 20°C/min, and heated again from 30°C to 260°C. There are a case where two or more melting peak temperatures are observed within the above temperature range and a case where a multi-step peak called a shoulder is observed, but in such cases, a temperature of a peak at which an absolute value of a vertical axis heat flow (unit: mW) is the largest in a DSC chart is taken as the melting point of the resin.

The polypropylene resin (A) is preferably mainly made of a homopolymer of the propylene, that is, homopolypropylene, but a propylene copolymer containing another unsaturated hydrocarbon as a copolymerization component may be used, or homopolypropylene and the copolymer may be mixed and used as long as the object of the present invention is not impaired. Examples of the copolymerization component contained in the propylene copolymer include ethylene, 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexane, styrene, allylbenzene, cyclopentene, norbornene, and 5-methyl-2-norbornene. Note that the homopolypropylene here refers to a resin containing a propylene unit in an amount of 99.5 mol% or more and 100 mol% or less in a case where a total amount of constituent units constituting the resin is 100 mol%.

In a case where the polypropylene resin (A) contains a copolymerization component other than the propylene, a copolymerization amount of the component is preferably less than 1 mol% from viewpoints of the dielectric breakdown voltage and heat resistance. Here, a copolymerization amount of components other than the propylene being less than 1 mol% means that the constituent units other than the propylene unit are less than 1 mol% in a case where the total amount of the constituent units of the resin constituting the polypropylene resin (A) is 100 mol%. In other words, in a case where the polypropylene resin (A) contains a polypropylene polymer in a copolymerization amount of less than 1 mol%, or a case where a propylene polymer in a copolymerization amount of 1 mol% or more and the homopolypropylene (or the polypropylene polymer in the copolymerization amount of less than 1 mol%) is mixed such that the constituent units other than propylene accounts for less than 1 mol% in the entire film, the copolymerization amount of the components other than the propylene is less than 1 mol%.

The polypropylene film of the present invention preferably has a dielectric breakdown voltage measured at 135°C of more than 325 V/um and 900 V/$\mu$m or less. A lower limit of the dielectric breakdown voltage is more preferably 345 V/um, still more preferably 390 V/um, and particularly preferably 420 V/um. The dielectric breakdown voltage is preferably as high as possible, but is 900 V/$\mu$m or less, preferably 550 V/um or less from the viewpoint of feasibility. In a case where the dielectric breakdown voltage of the film at 135°C is 325 V/um or more, the short-circuit breakage hardly occurs particularly when the film is used for a long time in the high-temperature environment as the film capacitor, the voltage resistance is maintained, and high reliability can be obtained.

In order to control the dielectric breakdown voltage of the film at 135°C to a range exceeding 325 V/um, it is effective to use the homopolypropylene having a high meso-pentad fraction as the polypropylene resin, to dilute or melt extrude, without change, the compounded resin raw material obtained by pre-kneading the cyclic olefin resin and the polypropylene resin with the twin-screw extruder to form a sheet, and to perform sequential biaxial stretching in which the stretch ratio in the machine direction is set to 4.0 times or more, the stretch ratio in the transverse direction is set to 8.5 times or more, and the area stretch ratio (stretch ratio in the machine direction * stretch ratio in the transverse direction) is set to 42 times or more.

The polypropylene film of the present invention preferably has a thickness of 0.50 um or more and 5.5 um or less from a viewpoint of being suitable for a heat-resistant film capacitor made of a thin film required for automobile applications (including hybrid car applications) and the like particularly used in the high-temperature environment. For applications of the above heat-resistant film capacitor, an upper limit of the thickness is preferably 4.0 um or less, and more preferably 3.2 um or less from a viewpoint of balance between characteristics of the film and a size of the film capacitor according to film thickness reduction. Note that the film thickness can be measured with a publicly known micrometer, and details thereof will be described later.

A method of adjusting the film thickness is not particularly limited, and for example, the film thickness can be reduced by reducing a slit width of a spinneret, reducing a discharge amount of a molten resin composition from the spinneret, increasing a take-up speed of casting, and increasing the stretch ratio, and these may be appropriately combined.

In the polypropylene film of the present invention, thickness unevenness in the machine direction is preferably 0.001% or more and 15% or less. The film containing the cyclic olefin resin needs to be stretched at a higher temperature in the production process as compared with a film without the resin. As a result, in the film containing the cyclic olefin resin, a locally thinned portion is likely to be generated as compared with a center thickness of the film. If a film having the locally thinned portion is used as the dielectric of the film capacitor, the portion serves as a starting point of dielectric breakdown, and the withstand voltage may decrease.

Setting the thickness unevenness of the polypropylene film to 15% or less can reduce the decrease in the withstand voltage depending on the above mechanism and increase the withstand voltage when the polypropylene film is formed into the film capacitor. From the above viewpoint, the thickness unevenness of the polypropylene film is more preferably 12% or less, still more preferably 10% or less, and particularly preferably 6% or less. From the above viewpoint, the thickness unevenness of the polypropylene film is preferably as small as possible, but is preferably 0.001% or more from the viewpoint of feasibility. A method of setting the thickness unevenness of the polypropylene film within the above-mentioned range is not particularly limited, and for example, a method of increasing a longitudinal stretch ratio of the film within a suitable range to be described later or a method of reducing the content of the cyclic olefin resin within a suitable range to be described later is effective. Note that these methods may be appropriately combined, but it is effective to set the longitudinal stretch ratio to be particularly high for the film containing the cyclic olefin resin.

In the polypropylene film of the present invention, the shrinkage rate of the film in the main orientation orthogonal direction measured at 150°C is preferably -2.0% or more and 4.0% or less from a viewpoint of being suitably used for film capacitor applications. From the above viewpoint, the shrinkage rate is more preferably 2.5% or less, still more preferably 2.0% or less, particularly preferably 1.0% or less, and most preferably 0.0% or less.

By setting the shrinkage rate of the film in the main orientation orthogonal direction measured at 150°C to 4.0% or less, a risk of failure can be reduced when a capacitor using the polypropylene film of the present invention as the film for the film capacitor is used for a long time at 135°C. The smaller the absolute value of the shrinkage rate in a range of 0.0% or less, the better, and from the viewpoint of feasibility, the absolute value is -2.0% or more, preferably -1.5% or more, and more preferably -1.0% or more.

As a method of setting the shrinkage rate to -2.0% or more and 4.0% or less, for example, it is effective to use homopolypropylene having a high meso-pentad fraction as the polypropylene resin, to increase the stretch ratio in the machine direction (for example, 4.5 times or more) when the biaxial stretching is performed, to increase a heat treatment temperature after transverse stretching, and the like.

Layer configuration of the polypropylene film of the present invention may be a single layer configuration or a multi-layer configuration. However, from viewpoints of exhibiting stretchability, excellent reliability in the high-temperature environment, and processability of the film, in a case where a layer containing the polypropylene resin as a main component and containing the cyclic olefin resin is a layer A, a layer containing the polypropylene resin as a main component and the cyclic olefin resin in an amount less than that of the layer A is a layer B, the film preferably has the layer A and the layer B. In particular, by employ such multi-layer configuration, it is easy to enhance the film formability while setting the area stretch ratio to 45 times or more. Here, the "layer containing the cyclic olefin resin in the amount less than that of the layer A" refers to a layer containing a smaller amount of the cyclic olefin resin determined in a similar manner than the amount (mass%) of the cyclic olefin resin in the layer A in a case where total content of components constituting the layer A is 100 mass%.

Specific examples of such aspect include a configuration in which the layer B is placed on one surface of the layer A (two-layer configuration of layer A/layer B), a configuration in which two layers B are placed on both surfaces of the layer A (three-layer configuration of layer B/layer A/layer B), a configuration in which the layer B is placed on one surface of the layer A and a layer C having a resin composition different from the layer A and the layer B is placed on a surface without the layer B (three-layer configuration of layer C/layer A/layer B), and a configuration of four or more layers in which two layers B are outermost layers of the both surfaces of the film. From the above viewpoint, the three-layer configuration of layer B/layer A/layer B and the configuration of four or more layers in which the layers B are the outermost layers on the both surfaces of the film are more preferable, and the three-layer configuration of layer B/layer A/layer B is still more preferable. Note that, in a case of having a plurality of layers B, composition of the layers B may be the same or different as long as the layers B contain more polypropylene resin than that of the layer A and a small amount of the cyclic olefin resin (hereinafter, the "layer A" and the "layer B" are used for the polypropylene film having the multi-layer configuration, based on the above definition).

From a viewpoint of voltage resistance at a high temperature, the polypropylene film of the present invention preferably has a temperature-falling crystallization temperature (Tmc) of 110°C or more as measured by differential scanning calorimetry. From the above viewpoint, the Tmc of the polypropylene film is more preferably 112°C or more, and still more preferably 114°C or more. By setting the Tmc of the polypropylene film to 110°C or more, the film before stretching becomes a structure in a fine crystal configuration particularly when the polypropylene film of the present invention is produced by biaxial stretching film formation. Therefore, the polypropylene film having dense protrusions formed by the biaxial stretching can be obtained. Accordingly, the polypropylene film is excellent in the withstand voltage at a high temperature and in productivity. An upper limit of the Tmc of the polypropylene film is preferably 150°C from the viewpoint of feasibility.

A method of setting the Tmc of the polypropylene film to 110°C or more is not particularly limited, and examples thereof include a method in which a crystal nucleating agent for promoting crystallization of the polypropylene is caused to be contained in the polypropylene film of the present invention. Examples of the crystal nucleating agent that can be used in the polypropylene film of the present invention include a sorbitol-based nucleating agent, a nonitol-based nucleating agent, an amide-based nucleating agent, an aromatic carboxylic acid metal salt, a phosphoric acid metal salt, a polypropylene resin having a crosslinked structure, and a branched polypropylene resin. However, from a viewpoint of suppressing film breakage during production due to foreign matters, it is preferable to use the branched polypropylene resin. Note that branched polypropylene refers to polypropylene having one or more side chains having 6 or more carbon atoms in a molecular chain of the polypropylene.

The branched polypropylene acts as a nucleating agent for accelerating crystallization when the polypropylene resin is melted and solidified. Causing the branched polypropylene to be contained in the film makes it easy to perform the film formation accompanied by stretching at a high ratio while promoting uniform crystallization and suppressing film breakage and void formation during the stretching, and particularly makes it possible to enhance film formability when the film is stretched at a high area stretch ratio of 45 times or more.

Content of the branched polypropylene is preferably 0.01 mass% or more, more preferably 0.1 mass% or more, still more preferably 1.0 mass% or more, and particularly preferably 5.0 mass% or more in a case where mass of the film is 100 mass% from a viewpoint of keeping the Tmc within the above-mentioned range. Meanwhile, the content of the branched polypropylene is preferably 50 mass% or less, more preferably 30 mass% or less, and still more preferably 10 mass% or less in a case where mass of the entire film is 100 mass%. By suppressing the content of the branched polypropylene to 50 mass% or less, it is possible to reduce film breakage during extrusion accompanied by an increase in melt tension.

Examples of a lamination method that can be used in the production of the polypropylene film of the present invention include a feed block method or a multi-manifold method by the co-extrusion and a method by coating. However, from viewpoints of production efficiency and production cost, the lamination method by the co-extrusion (for example, melt co-extrusion) is preferable.

In a case where the polypropylene film has the multi-layer configuration, an upper limit of a ratio of a thickness of the layer A to the total thickness of the polypropylene film is preferably 99%, more preferably 95%, still more preferably 90%, and most preferably 85% from a viewpoint of controlling the film formability and a surface shape of the film. Further, a lower limit of the ratio of the thickness is preferably 10%, more preferably 15%, and still more preferably 20%. For example, in a case where the polypropylene film has the three-layer configuration of layer B/layer A/layer B in which the layers B are directly laminated on both surface layers of the layer A, the ratio of the thickness of the layer A can be determined by dividing the thickness of the layer A excluding a thickness of each of the layers B on respective surfaces by the thickness of the polypropylene film and expressing the ratio in percentage. Setting the ratio of the layer A to 99% or less can sufficiently increase the area stretch ratio in the stretching, and lighten the deterioration of the voltage resistance in the high-temperature environment. Meanwhile, by setting the ratio of the layer A to 10% or more, deterioration of the thermal dimensional stability in the high-temperature environment is lightened.

Content of the polypropylene resin of the layer B in the polypropylene film of the present invention is preferably 95 mass% or more, more preferably 96 mass% or more, and still more preferably 97 mass% or more in a case where total content of constituent components of the layer B is 100 mass% from a viewpoint of obtaining high voltage resistance and excellent stretchability. An upper limit of the content is not particularly limited but is set to 100 mass%.

In a case where the layer B in the polypropylene film of the present invention contains the cyclic olefin resin, the content of the cyclic olefin resin is preferably 5 mass% or less, more preferably 4 mass% or less, still more preferably 3 mass% or less, and particularly preferably 1 mass% or less in the case where the total content of the constituent components of the layer B is 100 mass% from the viewpoint of obtaining high voltage resistance and excellent stretchability. Note that the layer B optionally contains the cyclic olefin resin, and a lower limit of the content of the cyclic olefin resin is 0.0 mass% (that is, an aspect without the cyclic olefin resin).

The content of the cyclic olefin resin of the layer A in the polypropylene film of the present invention is preferably 0.5 mass% or more, more preferably 1 mass% or more, still more preferably 4 mass% or more, and particularly preferably 7 mass% or more in a case where total content of constituent components of the layer A is 100 mass% from a viewpoint of enhancing the thermal dimensional stability at a high temperature and enhancing the reliability in a case where the film is used as the capacitor. Meanwhile, the content of the cyclic olefin resin in the layer A is preferably 38 mass% or less, more preferably 34 mass% or less, still more preferably 25 mass% or less, particularly preferably 19 mass% or less, particularly preferably 9.5 mass% or less, and most preferably 9.0 mass% or less in the case where the total content of the constituent components of the layer A is 100 mass% from a viewpoint of making the film breakage less likely to occur when the area stretch ratio is increased during the stretching.

Next, a resin that can be suitably used in the polypropylene film of the present invention will be described.

The cyclic olefin resin used in the polypropylene film of the present invention will be described. Examples of a cyclic olefin monomer used for producing the cyclic olefin resin used in the polypropylene film of the present invention include monocyclic olefins such as cyclobutene, cyclopentene, cycloheptene, cyclooctene, cyclopentadiene, and 1,3-cyclohexadiene, bicyclic olefins such as bicyclo[2,2,1]hept-2-ene, 5-methyl-bicyclo[2,2,1]hept-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,1]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene, and 5-propenyl-bicyclo[2,2,1]hept-2-ene, tricyclic olefins such as tricyclo[4,3,0,12.5]deca-3,7-diene, tricyclo[4,3,0,12.5]dec-3-ene, tricyclo[4,3,0,12.5]undeca-3,7-diene, tricyclo[4,3,0,12.5]undeca-3,8-diene, tricyclo[4,3,0,12.5]undec-3-ene, 5-cyclopentyl-bicyclo[2,2,1]hept-2-ene, 5-cyclohexyl-bicyclo[2,2,1]hept-2-ene, 5-cyclohexenylbicyclo[2,2,1]hept-2-ene, and 5-phenyl-bicyclo[2,2,1]hept-2-ene, tetracyclic olefins such as tetracyclo[4,4,0,12.5,17.10]dodec-3-ene, 8-methyltetracyclo[4,4,0,12.5,17.10]dodec-3-ene, 8-ethyltetracyclo[4,4,0,12.5,17.10]dodec-3-ene, 8-methylidenetetracyclo[4,4,0,12.5,17.10]dodec-3-ene, 8-ethylidenetetracyclo[4,4,0,12.5,17.10]dodec-3-ene, 8-vinyltetracyclo[4,4,0,12.5,17.10]dodec-3-ene, and 8-propenyl-tetracyclo[4,4,0,12.5,17.10]dodec-3-ene, and polycyclic olefins such as 8-cyclopentyl-tetracyclo[4,4,0,12.5,17.10]dodec-3-ene, 8-cyclohexyl-tetracyclo[4,4,0,12.5,17.10]dodec-3-ene, 8-cyclohexenyl-tetracyclo[4,4,0,12.5,17.10]dodec-3-ene, 8-phenyl-cyclopentyl-tetracyclo[4,4,0,12.5,17.10]dodec-3-ene, tetracyclo[7,4,13.6,01.9,02.7]tetradeca-4,9,11,13-tetraene, tetracyclo[8,4,14.7,01.10,03.8]pentadeca-5,10,12,14-tetraene, pentacyclo[6,6,13.6,02.7,09.14]-4-hexadecene, pentacyclo[6,5,1,13.6,02.7,09.13]-4-pentadecene, pentacyclo[7,4,0,02.7,13.6,110.13]-4-pentadecene, heptacyclo[8,7,0,12.9,14.7,111.17,03.8,012.16]-5-eicosene, heptacyclo[8,7,0,12.9,03.8,14.7,012.17,113.16]-14-eicosene, and a tetramer of cyclopentadiene. These cyclic olefin monomers can be used singly or in combination of two or more kinds thereof.

Among the above-mentioned cyclic olefin monomers, bicyclo[2,2,1]hept-2-ene (hereinafter referred to as norbornene), a 10C tricyclic olefin (hereinafter referred to as tricyclodecene) such as tricyclo[4,3,0,12.5]dec-3-ene, a 12C tetracyclic olefin (hereinafter referred to as tetracyclododecene) such as tetracyclo[4,4,0,12.5,17.10]dodec-3-ene, cyclopentadiene, or 1,3-cyclohexadiene is preferably used from viewpoints of productivity and surface properties.

The cyclic olefin resin may be either a resin (hereinafter, also referred to as COP) obtained by polymerizing only the cyclic olefin monomer or a resin (hereinafter, also referred to as COC) obtained by copolymerizing the cyclic olefin monomer and a chain olefin monomer as long as the above definition is satisfied.

A method of producing the COP may be a publicly known method such as addition polymerization or ring-opening polymerization of the cyclic olefin monomer. Examples of the method include a method of hydrolyzing norbornene, tricyclodecene, tetracyclodecene, or a derivative thereof after being subjected to ring-opening metathesis polymerization, a method of subjecting the norbornene or the derivative thereof to addition polymerization, and a method of hydrolyzing cyclopentadiene and cyclohexadiene after being subjected to 1,2- and 1,4-addition polymerization. Among the methods, the method of hydrolyzing the norbornene, the tricyclodecene, the tetracyclodecene, or the derivative thereof after being subjected to the ring-opening metathesis polymerization is more preferable from viewpoints of productivity and moldability.

In a case of the COC, examples of preferable chain olefin monomer include ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene.

Among the monomers, the ethylene or the propylene can be particularly preferably used from viewpoints of productivity, cost, and compatibility with the polypropylene resin, and these monomers may be used in combination. Further, examples of a method of producing the resin obtained by copolymerizing the cyclic olefin monomer and the chain olefin monomer include publicly known methods such as addition polymerization of the cyclic olefin monomer and the chain olefin monomer, and in particular, a method by binary polymerization or ternary polymerization of the norbornene or the tetracyclododecene and the derivatives thereof and the ethylene and/or the propylene can be used as a preferable method from viewpoints of productivity and moldability. In other words, for example, the binary polymerization of the derivative of the tetracyclododecene and the ethylene, or the ternary polymerization of the norbornene, the ethylene, and the propylene can be used as a preferable method.

The cyclic olefin resin used in the polypropylene film of the present invention is preferably amorphous. Moreover, a glass transition temperature of an amorphous cyclic olefin resin is preferably 125°C or more and 175°C or less. By setting the glass transition temperature to 125°C or more and 175°C or less, followability to the polypropylene resin can be enhanced during molding processing, and the thickness unevenness of the film can be easily suppressed. Therefore, the reliability and the withstand voltage at a high temperature of the film capacitor using the polypropylene film of the present invention can be increased. From the above viewpoint, the glass transition temperature is more preferably 130°C or more, and still more preferably 135°C or more. Meanwhile, from a viewpoint of molding processability, the glass transition temperature is more preferably 160°C or less, still more preferably 150°C or less, and particularly preferably 142°C or less.

In particular, in a case of performing stretching and a subsequent relaxation treatment in a process of the molding processing, if the glass transition temperature is designed to be 25°C or more lower than a heat treatment temperature, it is easy to produce the polypropylene film having excellent long-term thermal stability and high reliability in the case where the film is used as the film capacitor. Note that, in the polypropylene film of the present invention, the cyclic olefin resin being amorphous means that a melting peak temperature (Tm) obtained by the differential scanning calorimeter DSC is not observed when the cyclic olefin resin is heated from 30°C to 260°C at 20°C/min.

In the polypropylene film of the present invention, the glass transition temperature of the cyclic olefin resin can be measured in accordance with JIS K7121-1987 as follows. By using the differential scanning calorimeter, 3 mg of the film or the resin in a nitrogen atmosphere is heated from 30°C to 260°C under a condition of 20°C/min, then kept at 260°C for 5 minutes, and then cooled to 30°C under the condition of 20°C/min. Moreover, the film or the resin is further kept at 20°C for 5 minutes and heated as reheating from 30°C to 260°C under the condition of 20°C/min. From a DSC curve obtained in the reheating process, the glass transition temperature (Tg) is calculated according to the following equation. Note that the differential scanning calorimeter is not particularly limited as long as the measurement is possible, and a publicly known differential scanning calorimeter can be used. For example, EXSTAR DSC6220 manufactured by Seiko Instruments Inc. or the like can be used.

Glass transition temperature = (extrapolated glass transition starting temperature + extrapolated glass transition end temperature)/2.

From a viewpoint of eliminating defects and voids and increasing the withstand voltage, the polypropylene film of the present invention preferably has a total light transmittance of 85% or more and 99.9% or less. Here, the total light transmittance is a total light transmittance when light is perpendicularly incident on a surface of the film, that is, a total light transmittance in the thickness direction of the film. Further, from the above viewpoint, the total light transmittance is more preferably 88% or more, still more preferably 91% or more, and particularly preferably 94% or more. An upper limit of the total light transmittance is 99.9% from the viewpoint of feasibility. Note that the total light transmittance can be measured with a publicly known haze meter, and details thereof will be described later.

A method of keeping the total light transmittance within a suitable range is not particularly limited, and examples thereof include a method in which the cyclic olefin resin and the polypropylene resin are pre-kneaded when the cyclic olefin resin is caused to be contained in the polypropylene film, a method in which the branched polypropylene is added to the surface layer of the film, and a method in which a multi-layer configuration is formed by sandwiching the layer A between the layers B (for example, B/A/B). Further, after such multi-layer configuration described above is formed, it is also effective to reduce the amount of the cyclic olefin resin in the entire polypropylene film, and to increase the total light transmittance.

The polypropylene film of the present invention may contain various additives, for example, organic particles, inorganic particles, a crystal nucleating agent, an antioxidant, a heat stabilizer, a chlorine scavenger, a sliding agent, an antistatic agent, an anti-blocking agent, a filler, a viscosity modifier, and a coloring inhibitor as long as the object of the present invention is not impaired.

In a case where the antioxidant is contained among the additives, selection of a type and an addition amount of the antioxidant is important from a viewpoint of long-term heat resistance. In other words, such antioxidant is preferably a phenol-based antioxidant having steric hindrance, and at least one of the antioxidants is preferably a high molecular weight type, which has a molecular weight of 500 or more. Specific examples thereof include various high-molecular-weight type antioxidants, and for example, it is preferable to use 2,6-di-t-butyl-p-cresol (BHT: molecular weight of 220.4) in combination with 1,3,5-trimethyl-2,4,6-tris(3,5-di-t-butyl-4-hydroxybenzyl)benzene (for example, "Irganox" (registered trademark) 1330: molecular weight of 775.2, manufactured by BASF) or tetrakis[methylene-3(3,5-di-t-butyl-4-hydroxyphenyl)propionate]methane (for example, "Irganox" (registered trademark) 1010: molecular weight of 1,177.7, manufactured by BASF).

Total content of the high-molecular-weight type antioxidants having molecular weights of 500 or more is preferably in a range of 0.1 to 1.0 part by mass relative to the total amount of the resin. If the content of the antioxidants is too small, the long-term heat resistance may be poor. If the content of the antioxidants is too large, blocking at a high temperature due to bleed-out of the antioxidants may adversely affect the capacitor element. The total content is more preferably 0.2 to 0.7 parts by mass, and particularly preferably 0.3 to 0.5 parts by mass with respect to the total mass of the resin. In a case of the multi-layer configuration of 2 or more layers, the high-molecular-weight antioxidants having molecular weights of 500 or more are 0.3 to 0.5 parts by mass in each of the layers from as viewpoint of suppressing defects such as fish eyes and obtaining high quality and voltage resistance performance.

The polypropylene film of the present invention may contain a resin other than the polypropylene resin (A) or the cyclic olefin resin as long as the object of the present invention is not impaired. Specific examples of the resin include vinyl polymer resins including various polyolefin resins, polyester-based resins, polyamide-based resins, polyphenylene sulfide-based resins, polyimide-based resins, and polycarbonate-based resins. Particularly preferable examples thereof include polymethylpentene and syndiotactic polystyrene. Content of these resins is preferably less than 3 mass%, more preferably 2 mass% or less, and still more preferably 1 mass% or less, in a case where total content of the resin components constituting the polypropylene film is 100 mass%. If the content of the resin other than the polypropylene resin is 3 mass% or more, influence of a domain interface is large, so that the dielectric breakdown voltage under the high-temperature environment may be lowered.

The polypropylene film of the present invention is preferably used as a dielectric film for the film capacitor, and a type of the film capacitor is not limited. Specifically, from a viewpoint of electrode configuration, the film capacitor may be either a film capacitor obtained by winding a metal foil and the film together or a metal deposited film capacitor, and the polypropylene film is also preferably used in an oil-impregnated film capacitor impregnated with an insulating oil or a dry capacitor that does not use the insulating oil at all. However, from the characteristics of the polypropylene film of the present invention, the polypropylene film is particularly preferably used as the metal deposited film capacitor. From a viewpoint of a shape of the film, the film may be a winding type or a multi-layer type.

Since the polypropylene film usually has low surface energy and it is difficult to stably perform metal vapor deposition, it is preferable to perform a surface treatment before the vapor deposition for a purpose of improving adhesion to a metal membrane. Specific examples of the surface treatment include a corona discharge treatment, a plasma treatment, a glow treatment, and a flame treatment.

The polypropylene film of the present invention can be obtained by the biaxial stretching, a heat treatment, and the relaxation treatment using a raw material capable of giving the characteristics described above. As a method of the biaxial stretching, any of an inflation simultaneous biaxial stretching method, a tenter simultaneous biaxial stretching method, and a tenter sequential biaxial stretching method may be employed. Among the methods, the tenter sequential biaxial stretching method and the tenter simultaneous biaxial stretching method are preferably employed in terms of controlling formation stability, a crystalline/amorphous structure, the surface characteristics, and particularly the mechanical characteristics and the thermal dimensional stability of the film while increasing the stretch ratios of the present invention.

Next, a method of producing the polypropylene film of the present invention will be described by taking, as an example, a method using the polypropylene resin (A) as the polypropylene resin (the polypropylene resin (A) is the main component). First, a resin raw material is diluted or melt-extruded onto a support without change to obtain an unstretched film. As the resin raw material, it is preferable to use a compounded resin obtained by pre-kneading the cyclic olefin resin and the polypropylene resin (A) in advance. This unstretched film is stretched in the machine direction, then stretched in the transverse direction, and sequentially biaxially stretched. Then, the heat treatment and the relaxation treatment are performed to produce a biaxially oriented polypropylene film. Hereinafter, the production method will be described more specifically, and the present invention is not necessarily interpreted to be limited thereto.

First, in the polypropylene film of the present invention, from a viewpoint of improving the dispersion states of the cyclic olefin resin and the polypropylene resin (A) and particularly increasing the dielectric breakdown voltage of the film at a high temperature, it is preferable to mix and compound the cyclic olefin resin, the polypropylene resin, and the antioxidant in advance to obtain a compounded resin. For the compounding, a short-screw extruder, a twin-screw extruder, or the like can be used, but from viewpoints of a good dispersion state and high transparency, it is particularly preferable to use the twin-screw extruder. A temperature of the resin during the compounding is preferably within the following temperature range. First, the temperature is preferably 300°C or less, and more preferably 280°C or less. Meanwhile, the temperature is preferably 200°C or more, and more preferably 230°C or more.

The content of the cyclic olefin resin in the compounded resin is preferably 0.5 mass% or more, more preferably 1 mass% or more, still more preferably 4 mass% or more, and particularly preferably 10 mass% or more in a case where total content of components of the compounded resin is 100 mass%, and is more preferably 15 mass% or more and still more preferably 25 mass% or more from an economic viewpoint. Meanwhile, from the viewpoint of improving the dispersion state of the cyclic olefin resin, the content of the cyclic olefin resin in the compounded resin is preferably 49 mass% or less, preferably 40 mass% or less, and preferably 36 mass% or less.

The amount of the antioxidant is preferably 0.2 parts by mass or more, more preferably 0.3 parts by mass or more, and still more preferably 0.4 parts by mass or more, with respect to 100 parts by mass of the components of the compounded resin. An upper limit of the amount is 1.0 part by mass. Further, by setting the meso-pentad fraction of the polypropylene resin (A) to 0.960 or more, the melting point is increased, and the resin is suitable for use at a high temperature, which is preferable.

Next, the polypropylene resin (A) and the compounded resin are supplied to a single-screw extruder, passed through a filtration filter, and then extruded from a slit-shaped spinneret. A molten sheet extruded from the slit-shaped spinneret is solidified on a temperature-controlled casting drum (cooling drum) to obtain an unstretched polypropylene film. A temperature of the cooling drum is preferably 10°C or more, and preferably 110°C or less.

From a viewpoint of increasing the area stretch ratio, a multi-layer configuration is preferable. In this case, the compounded resin for the layer A and the polypropylene resin (A) are mixed and supplied to a single-screw extruder for an inner layer (layer A), and the polypropylene resin (A) is supplied to a single-screw extruder for a surface layer (layer B). Then, a resin laminated in a three-layer configuration of layer B/layer A/layer B is extruded as a molten sheet from the slit-shaped spinneret by the feed block method through the melt co-extrusion, and solidified on the temperature-controlled cooling drum, thereby obtaining an unstretched polypropylene film. The temperature of the cooling drum is preferably 10°C or more. Meanwhile, the temperature of the cooling drum is preferably 110°C or less, and more preferably 95°C or less.

As a method for bringing the molten sheet to adhere to the casting drum, any one of an electrostatic application method, an adhesion method using surface tension of water, an air knife method, a press roll method, an underwater casting method, an air chamber method, and the like may be used, and the air knife method that provides good flatness and is capable of controlling surface roughness is preferable. Further, in order to prevent vibration of the film, it is preferable to appropriately adjust a position of the air knife such that air flows downstream of the film production.

Next, the unstretched polypropylene film is biaxially stretched to be biaxially oriented. During the stretching, the unstretched polypropylene film is brought into contact with a roll set at a predetermined stretching temperature in the machine direction, and stretched at a predetermined ratio in the machine direction. The stretching temperature in the machine direction is preferably 100°C or more, more preferably 120°C or more, and still more preferably 148°C or more. Meanwhile, the stretching temperature in the machine direction is preferably 170°C or less, more preferably 165°C or less, and still more preferably 160°C or less. The stretch ratio in the machine direction is preferably 4.0 times or more, more preferably 4.5 times or more, and still more preferably 5.0 times or more. Meanwhile, the stretch ratio is preferably 10 times or less. After being stretched in the machine direction, the film is cooled to room temperature.

Next, the polypropylene film uniaxially stretched in the machine direction is guided to a tenter while both ends in the transverse direction of the film are held by clips. Here, in the present invention, an ambient temperature of the tenter in a preheating step immediately before the stretching in the transverse direction (preheating temperature in the transverse direction) is preferably set to a stretching temperature in the transverse direction +5°C or more. Meanwhile, a temperature in the preheating step is preferably the stretching temperature in the transverse direction +15°C or less, more preferably +12°C or less, and still more preferably +10°C or less. By keeping the temperature of the preheating step within the above-mentioned range, a fibril structure highly oriented in the machine direction by the uniaxial stretching can be further strengthened, and the dielectric breakdown voltage of the polypropylene film can be increased. Further, it is preferable to stabilize an insufficiently oriented molecular chain by high-temperature preheating from a viewpoint of improving the thermal dimensional stability after the uniaxial stretching.

Next, the ambient temperature of the tenter (stretching temperature in the transverse direction) at which the film is stretched in the transverse direction while the ends of the film are held by the clips is preferably 150°C or more, more preferably 155°C or more, and still more preferably 170°C or more from a viewpoint of uniformly stretching the cyclic olefin resin having a high glass transition temperature to enhance the reliability in the case where the film is formed into the film capacitor. Meanwhile, from the above viewpoint, the stretching temperature in the transverse direction is preferably 190°C or less, and more preferably 185°C or less.

From a viewpoint of increasing the dielectric breakdown voltage of the film, the stretch ratio in the transverse direction is preferably 7.4 times or more, more preferably 8.5 times or more, still more preferably 9.3 times or more, and particularly preferably 10.0 times or more. Meanwhile, from a viewpoint of stably performing the film formation, the stretch ratio in the transverse direction is preferably 20.0 times or less, more preferably 17.0 times or less, and still more preferably 15.0 times or less. In a case where the stretch ratio in the transverse direction is less than 7.4 times, since orientation contribution of the fibril structure highly oriented in the machine direction by the uniaxial stretching remains largely, there may be obtained a film in which the molecular chain in the film tend to move easily during evaluation of the dielectric breakdown voltage at a high temperature and in which the dielectric breakdown voltage is poor. Increasing the stretch ratio in the transverse direction rather than in the machine direction is preferable because orientation in the transverse direction is imparted while maintaining a highly orientated state in the machine direction, so that in-plane molecular chain tension is increased, whereby an effect of increasing the dielectric breakdown voltage particularly at a high temperature can be obtained.

Herein, the area stretch ratio is preferably 40.0 times or more. By setting the area stretch ratio to 40.0 times or more, the in-plane molecular chain tension of the film increases, and F(A23) + F(B23) can be easily increased. As a result, the obtained film has a high dielectric breakdown voltage particularly at a high temperature. In the present invention, the area stretch ratio is obtained by multiplying the stretch ratio in the machine direction by the stretch ratio in the transverse direction. The area stretch ratio is more preferably 40.0 times or more, still more preferably 42.0 times or more, and particularly preferably 49.0 times or more. An upper limit of the area stretch ratio is not particularly limited, and is 90.0 times in a case of the sequential biaxial stretching and 150 times in a case of the simultaneous biaxial stretching from the viewpoint of feasibility.

In the present invention, it is important to reduce the shrinkage rate in the main orientation direction while achieving a high area stretch ratio. In other words, in the present invention, dispersibility of the cyclic olefin resin domains dispersed in the polypropylene resin is enhanced, and a heat fixation temperature after the biaxial stretching is set at a high temperature, whereby a structure in which domains are expanded in the plane is formed without generating microvoids at a domain interface of the cyclic olefin resin, and a tension state of the polypropylene leading to the shrinkage is relaxed. Therefore, the shrinkage rate in the main orientation direction can be reduced while achieving a high area stretch ratio.

In the production of the polypropylene film of the present invention, in the subsequent heat treatment and relaxation treatment step, it is preferable to perform the heat treatment at a temperature of 165°C or more and 190°C or less with respect to the ambient temperature of the tenter and a glass transition temperature of the cyclic olefin resin +30°C or more while applying 2 to 20% relaxation in the transverse direction while tightly gripping the film in the transverse direction with the clips, from a viewpoint of enhancing the reliability in the case where the film is formed into the film capacitor, and the temperature is more preferably 172°C or more. In addition, the reliability of the film capacitor can be effectively enhanced by performing the heat treatment at a temperature that is the melting point or more of the polypropylene resin to be used and higher by 30°C or more than the glass transitio a relaxation treatment rate n temperature of the cyclic olefin resin to be used. From the above viewpoint, a relaxation treatment rate is preferably 5% or more, more preferably 7% or more, and still more preferably 9% or more. Meanwhile, from the viewpoint of increasing the dielectric breakdown voltage of the polypropylene film, the relaxation treatment rate is more preferably 18% or less, and still more preferably 150 or less.

After the heat treatment and the relaxation treatment, the film is guided to the outside of the tenter, the clips at the film ends are released in a room temperature atmosphere, a film edge is slit in a winder step, and a film product roll having a thickness of 0.50 um or more and less than 5.0 um is wound up. Here, in order to improve adhesion of deposited metal on a surface subjected to the vapor deposition before winding up the polypropylene film, it is preferable to perform a corona discharge treatment in air, nitrogen, carbon dioxide, or a mixed gas thereof.

Note that in order to obtain the polypropylene film of the present invention, specific examples of intended production conditions are as follows. Note that, although it is preferable to satisfy all of these production conditions, all of the conditions may not necessarily be included but may be appropriately combined. For example, the simultaneous biaxial stretching may be employed instead of "the sequential biaxial stretching in which the preheating temperature before the stretching in the transverse direction is the stretching temperature in the transverse direction +5°C or more and +15°C or less".

- The meso-pentad fraction of the polypropylene resin which is the main component is 0.960 or more.
- The polypropylene film has the layer A and the layer B, and the layer B contains the branched polypropylene.
- The cyclic olefin resin and the polypropylene resin are pre-kneaded.
- The content of the cyclic olefin resin is 1 mass% or more and 39 mass% or less.
- The area stretch ratio of the biaxial stretching is 40.0 times or more.
- The stretch ratio in the transverse direction is higher than the stretch ratio in the machine direction.
- In the sequential biaxial stretching, the preheating temperature before the stretching in the transverse direction is the stretching temperature in the transverse direction +5 to +15°C.
- The heat treatment and the relaxation treatment have been performed after the biaxial stretching.
- The heat treatment temperature after the biaxial stretching is 165°C or more and the glass transition temperature of the cyclic olefin resin +30°C or more.

Next, a metal membrane layered film obtained using the polypropylene film of the present invention, a film capacitor obtained using the metal membrane layered film, and a method of producing the metal membrane layered film and the film capacitor will be described.

The metal membrane layered film of the present invention has a metal membrane on at least one surface of the polypropylene film of the present invention. This metal membrane layered film can be obtained by disposing the metal membrane on the at least one surface of the polypropylene film according to the present invention.

In the present invention, a method of applying the metal membrane is not particularly limited, and for example, a method is preferably used in which aluminum or an alloy of aluminum and zinc is vapor-deposited on at least one surface of the polypropylene film to provide a metal membrane such as a deposited membrane as an internal electrode of the film capacitor. At this time, other metal components such as nickel, copper, gold, silver, and chromium can be vapor-deposited simultaneously or sequentially with aluminum. Further, on the deposited membrane, a protective layer can also be provided using an oil or the like. In a case where surface roughness of the polypropylene film is different between front and back surfaces of the film, it is preferable to dispose the metal membrane on a smooth surface side to form the metal membrane layered film from the viewpoint of enhancing the voltage resistance.

In the present invention, if necessary, after the metal membrane is formed, the metal membrane layered film can be subjected to an annealing treatment or a heat treatment at a specific temperature. Further, for insulation or other purposes, at least one surface of the metal membrane layered film may also be coated with a resin such as polyphenylene oxide.

The film capacitor of the present invention is formed using the metal membrane layered film of the present invention. In other words, the film capacitor of the present invention includes the metal membrane layered film of the present invention. For example, the film capacitor of the present invention can be obtained by laminating or winding the metal membrane layered film of the present invention described above by various methods. A preferred example of a method of producing a wound film capacitor is as follows.

Aluminum is vapor-deposited on one surface of the polypropylene film in a reduced pressure state. At that time, the vapor deposition is performed in a stripe shape having a margin portion running in the machine direction. Next, slits are made with a blade at a center of each of deposited portions and a center of each of margin portions on the surface to produce a tape-shaped winding reel having a margin on one side of the surface. Two tape-shaped winding reels respectively having a left margin and a right margin are overlapped and wound such that the deposited portion protrudes from the margin portion in the transverse direction to obtain a wound body.

In a case where both surfaces of the film are vapor-deposited, the vapor deposition is performed in the stripe shape having the margin portion running in the machine direction on one surface, and the vapor deposition is performed on the other surface in the stripe shape such that the margin portion in the machine direction is located at a center of the deposited portion on the back surface. Next, the slits are made with the blade at the center of each of the margin portions on the front and back surfaces to produce a tape-shaped winding reel having two surfaces each having a margin on one side (for example, if a margin is on the right side of the front surface, a margin is on the left side of the back surface). One undeposited layered film is wound around one obtained reel such that a metallized film protrudes from the layered film in the transverse direction and is overlapped with each other to obtain a wound body.

Examples of a method of obtaining the film capacitor of the present invention from the metal membrane layered film of the present invention include a method in which a core material is removed from the wound body produced as described above, the wound body is pressed, metallikon is thermally sprayed to both end surfaces to form an external electrode, and a lead wire is welded to the metallikon to form the wound film capacitor. The film capacitor can be used in a wide variety of applications such as power control unit applications of motor vehicles such as electric automobiles, hybrid vehicles, and fuel cell vehicles and electric aircraft such as a drone, railway vehicle applications, solar power generation/-wind power generation applications, general home appliance applications, and the like, and the film capacitor of the present invention can also be suitably used for these applications. In addition, the polypropylene film of the present invention can be preferably used in various applications such as a packaging film, a release film, a processing film, a sanitary product, an agricultural product, a building product, and a medical product, particularly in applications including a heating step in film processing.

The film capacitor of the present invention preferably has a capacitance density of 1.1 $\mu$F/cm$^3$ or more and 18 $\mu$F/cm$^3$ or less. The capacitance density of the film capacitor is more preferably 1.5 $\mu$F/cm$^3$ or more because as the capacitance density increases, a volume of the capacitor element decreases when the capacitor element having the same capacitance is produced, and the capacitor element can be downsized. From a viewpoint of downsizing the film capacitor, the capacitance density of the film capacitor is preferably as high as possible, and from the viewpoint of feasibility, is preferably 18 $\mu$F/cm$^3$ or less, and preferably 5.0 $\mu$F/cm$^3$ or less.

By using a film having a thickness of 4.5 um or less as the polypropylene film of the present invention, it is easy to set the capacitance density of the film capacitor to 1.1 $\mu$F/cm$^3$ or more, and by using a film having a thickness of 3.5 um or less, it is easy to set the capacitance density of the film capacitor to 1.5 $\mu$F/cm$^3$ or more.

Note that, in the present invention, the capacitance density of the film capacitor can be calculated by dividing an element capacitance ($\mu$F) by an element volume (cm$^3$). The element capacitance can be measured in accordance with JIS C 4908:2007 at a frequency of 1 kHz and an ambient temperature of 23°C. Further, the element volume refers to a volume of a portion around which the deposited film is wound, which does not include an exterior material, the metallikon, and the reel, and can be measured by a publicly known 3D scanner type three-dimensional measuring machine. Details of a method of measuring the capacitance density of the film capacitor will be described later.

The film capacitor of the present invention preferably has a withstand voltage of 0.60 kV or more at 135°C. The withstand voltage is more preferably 0.75 kV or more, and still more preferably 1.0 kV or more. Since the polypropylene film of the present invention has a high withstand voltage at a high temperature by having the above-mentioned characteristics, it is easy to set the withstand voltage at 135°C to 0.60 kV or more or in the above preferable range by using the polypropylene film as the dielectric of the film capacitor.

Hereinafter, a power control unit, a motor vehicle, and an electric aircraft of the present invention will be described. The power control unit of the present invention includes the film capacitor of the present invention. The power control unit is a system that manages power in a motor vehicle, an electric aircraft, or the like that has a mechanism driven by electric power. Mounting the film capacitor of the present invention on the power control unit allows the power control unit itself to be downsized, improved in heat resistance and increased in efficiency, resulting in improved fuel economy.

The motor vehicle of the present invention includes the power control unit of the present invention. Here, the motor vehicle refers to an automobile that has a mechanism driven by electric power, such as an electric automobile, a hybrid vehicle, and a fuel cell vehicle. As described above, the power control unit of the present invention can be downsized and is also excellent in heat resistance and efficiency, and thus, the motor vehicle includes the power control unit of the present invention, which leads to improvement in fuel efficiency and the like.

The electric aircraft of the present invention includes the power control unit of the present invention. Here, the electric aircraft refers to an aircraft that has a mechanism driven by electric power, such as a manned electric aircraft and a drone. As described above, the power control unit of the present invention can be downsized and is also excellent in heat resistance and efficiency, and thus, the electric aircraft includes the power control unit of the present invention, which leads to improvement in fuel efficiency and the like.

A packaging material of the present invention includes the polypropylene film of the present invention. The packaging material of the present invention is excellent in structural stability against heat during the vapor deposition, and has a favorable water vapor barrier property and an oxygen barrier property particularly when a transparent deposited layer is laminated, so that the packaging material can be suitably used for packaging those easily deteriorated due to water vapor or oxygen.

EXAMPLES

Hereinafter, the polypropylene film of the present invention will be described more specifically with reference to examples. However, the polypropylene film of the present invention is not limited to these examples. Note that Measurement methods of measuring characteristic values and evaluation methods of the effects in the present invention are as follows.

[Measurement and evaluation methods]

(1) Film thickness

Thicknesses of the polypropylene film were measured at 10 random positions in an atmosphere of 65% RH at 23°C using a contact type electronic micrometer (K-312A type) manufactured by ANRITSU CORPORATION. An arithmetic average value of the thicknesses at the 10 positions was taken as a film thickness (unit: um) of the polypropylene film.

(2) Main orientation direction and main orientation orthogonal direction of film

In the present invention, the main orientation direction of the film was determined according to the method described above. Regarding the main orientation direction of the film described in the examples, more specifically, the main orientation direction was determined as follows. Note that the main orientation orthogonal direction was taken as a direction orthogonal to the main orientation direction in the film plane.

Examples 1 to 7 and Comparative Examples 1, 3 and 4: Since the film was produced by the sequential biaxial stretching such that a transverse stretch ratio was higher than a longitudinal stretch ratio, a transverse stretching direction was taken as the main orientation direction.

Comparative Example 2: Since the film was produced by the simultaneous biaxial stretching such that the transverse stretch ratio was higher than the longitudinal stretch ratio, the transverse stretching direction was taken as the main orientation direction.

Comparative Example 5: Since the film was not stretched, the main orientation direction was determined by the tensile test method described above.

(3) Melting peak temperature (Tm) of resin and film

Using the differential scanning calorimeter (EXSTAR DSC6220 manufactured by Seiko Instruments Inc.), 3 mg of the film in a nitrogen atmosphere was heated from 30°C to 260°C under a condition of 20°C/min, then kept at 260°C for 5 minutes, and then cooled to 30°C under the condition of 20°C/min. An endothermic peak temperature obtained in the heating process was taken as a melting peak temperature of the film. In the present example, the (Tm) was calculated from an average value obtained by measurement for n = 3. There are a case where two or more peak temperatures are observed within a range of more than 170°C and 200°C or less and a case where a peak temperature (observed in a case of a chart with two or more peaks overlapped with each other) that can be observed in a multi-step DSC chart called a shoulder appears, and in the present example, a temperature of a peak at which an absolute value of a vertical axis heat flow (unit: mW) is the largest in the DSC chart was taken as the (Tm) (°C). Note that the (Tm) of the resin was also measured in a similar manner.

(4) Glass transition temperature (Tg) of cyclic olefin resin

Measurement was performed in accordance with JIS K7121-1987. Using the differential scanning calorimeter (EXSTAR DSC6220 manufactured by Seiko Instruments Inc.), 3 mg of the film or the resin in the nitrogen atmosphere was heated from 30°C to 260°C under the condition of 20°C/min, then kept at 260°C for 5 minutes, and then cooled to 30°C under the condition of 20°C/min. The film or the resin was further kept at 20°C for 5 minutes and heated as reheating from 30°C to 260°C under the condition of 20°C/min. From the DSC curve obtained in the reheating process, the glass transition temperature (Tg) was calculated according to the following equation.

Glass transition temperature = (extrapolated glass transition starting temperature + extrapolated glass transition end temperature)/2.

(5) F(A23) and F(B23)

A rectangular polypropylene film (width (short side) 10 mm * length (long side) 150 mm) cut out along a film test length direction (main orientation direction or main orientation orthogonal direction) as a long side direction was used as a measurement sample. Next, the sample was set in a tensile tester ("Tensilon" (registered trademark) UCT-100 manufactured by ORIENTEC CO., LTD.) at an initial chuck-to-chuck distance of 20 mm, and a tensile test of the sample was performed in a room at 23°C at a tensile speed of 300 mm/min. At this time, a position of the sample in a length direction was adjusted such that a center of the sample was near the middle between the chucks. A load applied to the film when the sample was ruptured was read, and a value obtained by dividing the load by a cross-sectional area (film thickness * width (10 mm)) of the sample before the test was calculated as a strength (unit: MPa). The measurement was performed five times for each of samples for measurement in the machine direction and the transverse direction, and a strength in the test length direction was obtained as an arithmetic average value of the strengths of the samples. A strength in a case where the test length direction was the main orientation direction was taken as F(A23), and a strength in a case where the test length direction was the main orientation orthogonal direction was taken as F(B23). Note that, as the film thickness used for calculating the strength, a value measured in (1) above was used.

(6) Shrinkage rate measured at 150°C

In each of the main orientation direction and the main orientation orthogonal direction of the film, 5 samples each having a width of 10 mm and a length of 200 mm (measurement direction) were cut out, and each of the samples was marked at a position of 25 mm from both ends to give a test length of 150 mm ($l_0$). Next, each of test pieces was sandwiched between paper, heated in an oven maintained at 150°C for 15 minutes in an unloaded state, then taken out and cooled at room temperature. Next, a dimension ($l_1$) of the test piece was measured and a thermal shrinkage rate of the test piece was determined according to the following equation. For each direction, an arithmetic average value of the thermal shrinkage rates of the 5 samples was taken as a thermal shrinkage rate measured at 150°C in the direction.

$$\text{Thermal shrinkage rate} = \{(l_0 - l_1)/l_0\} * 100\ (\%)$$

(7) Developed area ratio Sdr

The developed area ratio was measured and calculated in accordance with ISO 25178 (2012). However, the measurement was performed using a scanning type white interference microscope "VS1540"(manufactured by Hitachi High-Tech Science Corporation, measurement conditions and apparatus configurations will be described later). Further, an image capturing screen was complemented (completely complemented) by attached analysis software, surface correction was performed by polynomial quartic approximation, and then processed by a median filter (3 * 3 pixels) to obtain an electro-magnetic surface measured. Further, a S-filter Nesting Index of the S-filter was set to 0.445. The measurement was performed on both surfaces of a film cut into a square shape of 5 cm * 5 cm. A diagonal intersection was defined as a first measurement point (point 1), positions 1 cm away from a start point toward each of four corners were defined as points 2, 3, 4, and 5, respectively, in a clockwise direction, a midpoint of a line segment connecting the points 2 and 3 was defined as a point 6, a midpoint of a line segment connecting the points 3 and 4 was defined as a point 7, a midpoint of a line segment connecting the points 4 and 5 was defined as a point 8, and a midpoint of a line segment connecting the points 5 and 2 was defined as a point 9. A total of nine measurement points 1 to 9 were determined, and the measurement was performed at each of the measurement points. The Sdr at each of measurement positions was obtained from measurement results according to the above procedure, and an average value of five values excluding first and second largest values and eighth and ninth largest values among nine obtained values for each of the surfaces was employed as the Sdr of the film on a corresponding surface. In Tables 1-2 and 2-2, for convenience, the surfaces were defined such that one surface of the film is defined as surface 1 and the back surface of the film as surface 2, and the Sdr of each of the surfaces is listed.

<Measurement conditions and apparatus configurations>

Objective lens: 10x
Lens barrel: 1x
Zoom lens: 1x
Wavelength filter: 530 nm white
Measurement mode: Wave
Measurement software: VS-Measure 10.0.4.0
Analysis software: VS-Viewer 10.0.3.0
Measurement area: 561.1 um * 561.5 um
Number of pixels: 1,024 * 1,024.

(8) Total light transmittance

Using a haze meter (HGM-2DP) manufactured by Suga Test Instruments Co.,Ltd., measurement was performed under the following apparatus configurations and optical conditions. A polyolefin film was cut into a size of 6.0 cm * 3.0 cm, and a value of a total light transmittance of the film in the thickness direction is obtained from a measured value when light incident perpendicularly to a surface of the polyolefin film was measured. Note that the measurement was performed five times, and an average value of total light transmittances was taken as the total light transmittance.

Light source: halogen lamp 12 V, 50 W
Light receiving characteristics: 395 to 745 nm

Optical conditions: in accordance with JIS-K7105-1981.

(9) Dielectric breakdown voltage (V/um) of film

In a case where the dielectric breakdown voltage of the film at 135°C was measured, the film was heated for 1 minute in an oven maintained at 135°C, and then the dielectric breakdown voltage was measured in accordance with JIS C2330 (2001) 7.4.11.2 B method (flat plate electrode method) in the atmosphere. However, as for a lower electrode, one obtained by placing "Conductive Rubber E-100 <65>" manufactured by TOGAWA RUBBER CO., LTD., which has the same dimensions on a metal plate described in Method B of JIS C 2330 (2001) 7.4.11.2 was used. A breakdown voltage test was performed 30 times, and each of obtained values was divided by the thickness of the film (measured as in the above (1)) and converted into a unit of V/um. From measured values (calculated values) of 30 points in total, 5 points in descending order from the maximum value and 5 points in ascending order from the minimum value were excluded, and an average value of the remaining 20 points was taken as the dielectric breakdown voltage at 135°C.

(10) Evaluation of film capacitor characteristics (withstand voltage and reliability at 135°C, film formability, and processability)

Aluminum was vapor-deposited on one surface (a surface having higher wet tension in a case where the wet tension was different between the front and back surfaces) of the film in a deposition pattern having a film resistance of 10 $\Omega$/sq and a magin portion called a T-shaped margin (machine direction pitch (period) of 17 mm and fuse width of 0.5 mm due to masking oil), in which the margin portion was disposed in a direction perpendicular to the machine direction using a vacuum deposition machine manufactured by ULVAC, Inc. to obtain a deposition reel having a film width of 50 mm (end margin width of 2 mm) after slitting. Then, using this reel, the capacitor element was wound with an element winding machine (KAW-4NHB) manufactured by KAIDO MFG CO., LTD., subjected to the metallikon, and then subjected to a heat treatment at a temperature of 128°C for 12 hours under a reduced pressure, and a lead wire was attached to finish the capacitor element. Using such obtained 10 capacitor elements, a so-called step-up test was performed in which an operation of applying a voltage of 150 VDC to the capacitor elements at a high temperature of 135°C and gradually increasing the applied voltage stepwise at 50 VDC/1 min after a lapse of 10 minutes at the voltage was repeated.

<Evaluation of withstand voltage>

In the step-up test, a change in electrostatic capacitance was measured and plotted on a graph, a voltage at which the capacitance reached 75% of an initial value was divided by the thickness of the film (a value measured as in the above (1)) to determine the withstand voltage, and an average value of withstand voltages from 10 capacitor elements was calculated and evaluated according to the following criteria. S, A, B, and C mean that the element can be used, and D means that the element is inferior in practical performance.

S: Greater than 420 V/um.
A: More than 390 V/um and 420 V/um or less.
B: More than 325 V/um and 390 V/um or less.
C: More than 300 V/um and 325 V/um or less.
D: 300 V/um or less.

<Evaluation of reliability>

After increasing the voltage until the electrostatic capacitance decreased to 18% or less with respect to the initial value, 1 of the 10 capacitor elements to which a highest withstand voltage was applied was disassembled to examine breakdown states, and the reliability was evaluated as follows. S means that the element can be used, A, B, and C mean that the element can be used depending on the conditions, and D means that the element is inferior in practical performance.

S: No change in element shape and no penetrating destruction were observed.
A: There was no change in element shape, and penetrating destruction of 1 or more and 2 or less layers of the film was observed.
B: There is no change in element shape, and penetrating destruction of 3 or more and 5 or less layers of the film was observed.
C: There is no change in element shape, and penetrating destruction of 6 or more and 10 or less layers of the film was observed.

D: A change in the element shape was confirmed, or penetrating destruction of 11 or more layers was observed.

<Evaluation of film formability>

An operation of consistently forming a film under conditions described in the examples and comparative examples and recording a length of the film that could be wound from start of the winding until film breakage occurred was performed three times, and the film formability was evaluated as follows with an average value from the operation for three times as a film-formable film length. A means that the film can be stably formed, B and C mean that the film can be formed although a yield of the film is low, and D means that the film formation is substantially difficult. Note that in a case where no film breakage was observed at a timepoint of winding for 15000 m, the following work was performed with the film length of that time set to 15000 m.

A: The film-formable film length was 10,000 m or more.
B: The film-formable film length was 5000 m or more and less than 10,000 m.
C: The film-formable film length was 1000 m or more and less than 5000 m.
D: The film-formable film length was less than 1000 m.

<Evaluation of processability>

During slitting after the vapor deposition, the processability was evaluated according to a frequency of the rupture of the polypropylene film according to the following evaluation criteria. In the evaluation criteria, "A" means that the film can be used, "B" and "C" mean that the film can be used depending on conditions, and "D" means that the film has poor practical performance and is difficult to be used.

A: The number of ruptures per slit length of 20,000 m was 1 or less.
B: The number of ruptures per slit length of 20,000 m was more than 1 and 3 or less.
C: The number of ruptures per slit length of 20,000 m was more than 3 and 10 or less.
D: The number of ruptures per 20,000 m of slit length was more than 10.

(11) Number of domains (number/2 $\mu$m$^2$) of cyclic olefin resin passing through pair of sides parallel to thickness direction in rectangle of 1 $\mu$m * 2 $\mu$m in layer A

Using a microtome method, the polypropylene film was cut along a plane parallel to the main orientation axis direction-thickness direction to produce a polypropylene film piece having a cut surface. The cut surface was stained with $RuO_4$, and then the stained surface was cut, and an ultrathin slice having a cross section (TD/ZD cross section) was collected. The cross section of the ultrathin slice was observed using a transmission electron microscope (TEM) under the following conditions. Note that at this time, the cyclic olefin resin is stained blacker than the polypropylene resin.

• Apparatus: transmission electron microscope (TEM) HT7700 manufactured by Hitachi, Ltd.
• Acceleration voltage: 100 kV
• Observation magnification: 2,000x

A rectangle having a pair of sides of 1 um in the thickness direction and 2 um in the direction orthogonal to the thickness direction and surrounded by a square of $2\mu$m$^2$ was drawn on a layer A portion of a collected cross-sectional TEM image, and the number of the domains of the cyclic olefin resin passing through a pair of sides parallel to the thickness direction in the rectangle was counted. An average value of the numbers of the domains obtained by performing similar measurement a total of 10 times while changing a position of the rectangle in the image was calculated and taken as the number of the domains (number/2 $\mu$m$^2$) of the cyclic olefin resin passing through the pair of sides parallel to the thickness direction in the layer A. Note that, when the rectangle having the pair of sides of 1 um in the thickness direction and 2 um in the direction orthogonal to the thickness direction was defined in the section X, the base of the rectangle was set in the sea portion, and in a case where a domain was located on a side facing the base, the domain was considered to be absent and was not counted as the domains. Further, a domain having a constricted portion was also treated as a connected domain.

(12) Temperature-falling crystallization temperature (Tmc) of resin and film

Measurement was performed in accordance with JIS 7121-1987. First, using the differential scanning calorimeter (EXSTAR DSC6220 manufactured by Seiko Instruments Inc.), 3 mg of the film in the nitrogen atmosphere was heated from 30°C to 260°C under the condition of 20°C/min, then kept at 260°C for 5 minutes, and then cooled to 30°C under the condition of 20°C/min. A peak temperature of an exothermic peak obtained in a temperature falling process was measured. In this example, an average value of peak temperatures measured for n = 3 was taken as the temperature-falling crystallization temperature (Tmc) of the film. In a case where a plurality of the exothermic peaks were observed in single measurement, a peak temperature of an exothermic peak having a highest peak temperature was taken as the peak temperature in the measurement.

(13) Thickness unevenness in machine direction

A sample was obtained by cutting out the polypropylene film from an arbitrary place of the film to have a length of 200 mm in the machine direction and 20 mm in the transverse direction, and the thickness of the sample was measured with a contact type film thickness meter lightmatic VL-50A(10.5mm$\varphi$ ultra-hard spherical surface measuring element, measurement load of 0.06 N) manufactured by Mitutoyo Corporation. The thickness was measured at 100 positions at intervals of 1 mm at a center in a transverse direction of the sample with respect to the machine direction. The thickness unevenness was determined according to the following equation from a maximum value, a minimum value, and an average value at the 100 positions in each of the machine direction and the transverse direction.

Thickness unevenness (%) = ((maximum thickness value --> - minimum thickness value)/average thickness value at 100 positions) * 100

(14) Capacitance density of film capacitor

Capacitance of 10 capacitor elements was measured in accordance with JIS C 4908:2007 at a frequency of 1 kHz and an ambient temperature of 23°C using an E4980A Precision LCR meter manufactured by Keysight Technologies, and an average value of the capacitance of the 10 capacitor elements was taken as element capacitance. Next, a volume of each of the capacitor elements was measured with a 3D scanner type three-dimensional measuring instrument VL-500 manufactured by KEYENCE CORPORATION to be taken as an element volume. From the obtained values, the capacitance density was calculated for each of the elements according to the following equation, and an average value of capacitance densities of the 10 capacitor elements was employed as a measured value. Note that the element volume here was taken as a volume of a portion around which the deposited film was wound, which does not include the exterior material, the metallikon, and the reel.

Capacitance density ($\mu$F/cm$^3$) = element capacitance ($\mu$F)/element volume (cm$^3$).

(15) Withstand voltage of film capacitor at 135°C

Using 10 capacitor elements, the so-called step-up test was performed in which the operation of applying the voltage of 150 VDC to the capacitor elements at the high temperature of 135°C and gradually increasing the applied voltage stepwise at 50 VDC/1 min after the lapse of 10 minutes at the voltage was repeated. In the step-up test, the change in electrostatic capacitance was measured and plotted on a graph, and the voltage at which the capacitance reached 75% of the initial value was recorded as the withstand voltage of the film capacitor at 135°C.

(16) Evaluation of film capacitor performance

<Evaluation of service life>

Using 10 capacitor elements, a voltage of 750VDC was applied to the capacitor elements at a high temperature of 135°C, and the capacitor elements were taken out every 100 hours to measure the capacitance of the capacitor element. Time at which the capacitance became 90% or less of the initial value was determined, and the average value of the capacitance of the 10 capacitor elements was calculated as the service life, and evaluated in accordance with the following criteria. A means that the capacitor element can be used, B means that the capacitor element is inferior in practical performance, and C means that the capacitor element is difficult to be used.

    A: The service life is 3000 hours or more.
    B: The service life is less than 3000 hours and 2000 hours or more.
    C: The service life is less than 2000 hours.

<Evaluation of element size (index of downsizing)>

The volumes of 10 capacitor elements were measured with a VL-500 3D scanner type three-dimensional measuring instrument manufactured by KEYENCE CORPORATION, and an average value of the volumes taken as the element volume and evaluated in accordance with the following criteria. A and B mean that the element can be used, and C means that the element is inferior in practical performance. Note that the element volume referred to herein is the same as that used in the measurement of "(14) Capacitance density of film capacitor".

A: The element volume is 80 $cm^3$ or less.
B: The element volume is more than 80 $cm^3$ and 160 $cm^3$ or less.
C: The element volume is larger than 160 $cm^3$.

[Resin and the like]

In the production of the polypropylene film in each of the examples and the comparative examples, the following resins and the like were used.

<Polypropylene resin>

Polypropylene resin 1:
A homopolypropylene having a meso-pentad fraction of 0.984, a melting point of 168°C, and a melt flow rate (MFR) of 2.2 g/10 min.
Polypropylene resin 2:
A homopolypropylene having a meso-pentad fraction of 0.982, a melting point of 167°C, and a melt flow rate (MFR) of 2.2 g/10 min.
Polypropylene resin 3:
A homopolypropylene having a meso-pentad fraction of 0.972, a melting point of 166°C, and a melt flow rate (MFR) of 2.2 g/10 min.
Polypropylene resin 4:
A homopolypropylene having a meso-pentad fraction of 0.970, a melting point of 166°C, and a melt flow rate (MFR) of 3.3 g/10 min ("Borclean" (registered trademark) HC300BF available from Borealis AG).
Branched polypropylene (B1):
A branched polypropylene resin having a melt flow rate (MFR) of 2.4 g/10 min ("Daploy" (registered trademark) WB135HMS from Borealis AG).

<Components other than polypropylene resin>

Cyclic olefin resin (C1):

"TOPAS" (registered trademark) 6013F-04 (a resin (COC) obtained by copolymerizing ethylene and norbornene, having a glass transition temperature of 138°C, and being amorphous) manufactured by Polyplastics Co., Ltd.

Cyclic olefin resin (C2):
"TOPAS" (registered trademark) 6017S-04 (a resin (COC) obtained by copolymerizing ethylene and norbornene, having a glass transition temperature of 178°C, and being amorphous) manufactured by Polyplastics Co., Ltd.
Antioxidant:
"IRGANOX" (registered trademark) 1010 manufactured by Ciba Specialty Chemicals.

<Raw materials obtained by pre-kneading cyclic olefin resin>

Raw material (A1):
Respective components were mixed such that the polypropylene resin 1 was 69.5 parts by mass, the cyclic olefin resin (C1) was 30 parts by mass, and the antioxidant was 0.5 parts by mass, and kneaded and extruded with the twin-screw extruder set at 260°C, and then strands were cooled with water and made into chips to obtain the raw material (A1).

Raw material (A2-1):
Respective components were mixed such that the polypropylene resin 2 was 69.5 parts by mass, the cyclic olefin resin (C1) was 30 parts by mass, and the antioxidant was 0.5 parts by mass, and kneaded and extruded with the twin-screw extruder set at 260°C, and then strands were cooled with water and made into chips to obtain the raw material (A2-1).
Raw material (A2-2):
Respective components were mixed such that the polypropylene resin 2 was 54.5 parts by mass, the cyclic olefin resin (C1) was 45 parts by mass, and the antioxidant was 0.5 parts by mass, and kneaded and extruded with the twin-screw extruder set at 260°C, and then strands were cooled with water and made into chips to obtain the raw material (A2-2).
Raw material (A3):
Respective components were mixed such that the polypropylene resin 3 was 69.5 parts by mass, the cyclic olefin resin (C1) was 30 parts by mass, and the antioxidant was 0.5 parts by mass, and kneaded and extruded with the twin-screw extruder set at 260°C, and then strands were cooled with water and made into chips to obtain the raw material (A3).
Raw material (A4):
Respective components were mixed such that the polypropylene resin 4 was 54.5 parts by mass, the cyclic olefin resin (C1) was 45 parts by mass, and the antioxidant was 0.5 parts by mass, and kneaded and extruded with the twin-screw extruder set at 260°C, and then strands were cooled with water and made into chips to obtain the raw material (A4).
Raw material (A5):
Respective components were mixed such that the polypropylene resin 2 was 54.5 parts by mass, the cyclic olefin resin (C2) was 45 parts by mass, and the antioxidant was 0.5 parts by mass, and kneaded and extruded with the twin-screw extruder set at 260°C, and then strands were cooled with water and made into chips to obtain the raw material (A5).

<Raw materials obtained by pre-kneading branched polypropylene>

Raw material (D1):
Respective components were mixed such that the polypropylene resin 1 was 89.5 parts by mass, the branched polypropylene (B1) was 10 parts by mass, and the antioxidant was 0.5 parts by mass, and kneaded and extruded with the twin-screw extruder set at 260°C, and then strands were cooled with water and made into chips to obtain the raw material (D1).
Raw material (D2):
Respective components were mixed such that the polypropylene resin 2 was 89.5 parts by mass, the branched polypropylene (B1) was 10 parts by mass, and the antioxidant was 0.5 parts by mass, and kneaded and extruded with the twin-screw extruder set at 260°C, and then strands were cooled with water and made into chips to obtain the raw material (D2).

(Example 1)

Respective components were mixed such that the raw material (A2-1) was 35 parts by mass, the polypropylene resin 2 was 64.6 parts by mass, and the antioxidant was 0.4 parts by mass, and supplied to a single-screw melt extruder for a layer A. In addition, the respective components were mixed such that the polypropylene resin 2 was 50 parts by mass and the raw material (D2) was 50 parts by mass, and supplied to a single-screw melt extruder for a layer B. The mixture were melted at 260°C, and foreign matters were removed with an 80 um cut sintered filter. Then, an extrusion amount of the mixture was adjusted with a feed block such that a lamination thickness ratio of three-layer lamination B/A/B was 1/10/1 (a ratio of the inner layer A to the thickness of the entire thickness was 83%), and a molten layered polymer was discharged from a T-die. Then, a molten sheet was brought to adhere to a casting drum kept at 90°C using an air knife, and cooled and solidified to obtain an unstretched polypropylene film. The unstretched polypropylene film was wound around a plurality of roll groups, preheated in a stepwise manner up to 145°C, then passed through rolls kept at 155°C and set with a difference in circumferential speed, and stretched 5.4 times in the machine direction. Next, the film was guided to the tenter, preheated at a preheating temperature of 188°C in the transverse direction (TD) (6°C higher than a TD stretching temperature) with both ends in the machine direction and the transverse direction of the film held by clips, and then stretched 10.4 times in the transverse direction at a TD stretching temperature of 182°C. Moreover, a heat treatment was performed at 175°C while applying relaxation of 10% in the transverse direction as the heat treatment and the relaxation treatment, the film was guided to the outside of the tenter, the clips were released, and the surface of the film (a surface being in contact with the casting drum) was then subjected to a corona discharge treatment at a treatment intensity of 25 W-min/m$^2$ in the atmosphere, thereby obtaining a polypropylene film. Evaluation results are shown in Tables 1 and 2.

(Examples 2 to 5 and 8 and Comparative Examples 3 and 4)

The polypropylene film was obtained in a similar manner as in Example 1 except that raw material formulations were raw material formulations shown in Table 1-1 and Table 2-1, and film formation conditions were film formation conditions shown in Table 1-2 and Table 2-2. Evaluation results are shown in Table 1-2 and Table 2-2. Note that the thickness of the film was adjusted by increasing or reducing a discharge amount of the extruder (hereinafter, the same applies to other examples and comparative Examples).

(Example 6)

Respective components were mixed such that the raw material (A3) was 10 parts by mass, the polypropylene resin 2 was 89.6 parts by mass, and the antioxidant was 0.4 parts by mass, and supplied to the single-screw melt extruder. The polypropylene film only having the layer A was obtained in a similar manner as in Example 1, except that the mixture was melted at 260°C, foreign matters were removed with the 80 um cut sintered filter, a molten polymer was discharged from the T-die, a molten sheet is then brought to adhere to the casting drum kept at 90°C using the air knife, and cooled and solidified, and other film formation conditions were the film formation conditions shown in Table 1-2. Evaluation results are shown in Tables 1 and 2.

(Example 7 and Comparative Examples 1 and 5)

The polypropylene film was obtained in a similar manner as in Example 6 except that raw material formulations were the raw material formulations in Table 1-1 and Table 2-1, and film formation conditions were the film formation conditions shown in Table 1-2 and Table 2-2. Evaluation results are shown in Table 1-2 and Table 2-2. Note that Comparative Example 5 was an unstretched film, and steps from the stretching to the heat treatment were not performed.

(Comparative Example 2)

Respective components were mixed such that the polypropylene resin 4 was 79.6 parts by mass, the cyclic olefin resin (C1) was 20 parts by mass, and further the antioxidant was 0.4 parts by mass, supplied to a single-screw extruder set at 260°C, melted at a temperature of 260°C, then foreign matters were removed with the 80 um cut sintered filter, and a molten single-layer polymer was discharged from the T-die. The molten single-layer polymer was brought to adhere to the casting drum kept at 90°C using the air knife, and cooled and solidifed, thereby obtaining an unstretched polypropylene film. The obtained unstretched polypropylene film was guided to a simultaneous biaxial stretching machine, preheated at 163°C with the both ends of the film in the machine direction and the transverse direction held by the clips, and subjected to the simultaneous biaxial stretching of 3.6 times in the machine direction and 8.2 times in the transverse direction. Next, the film was guided to the outside of the simultaneous biaxial stretching machine without being subjected to the heat treatment and the relaxation treatment, the clips at the ends of the film were released, and the corona discharge treatment was performed in a similar manner as in Example 1, thereby obtaining a polypropylene film. Evaluation results are shown in Table 2-2.

(Comparative Examples 6 to 8)

An attempt was made to obtain polypropylene films of 5.5 um in Comparative Example 6, 3.5 um in Comparative Example 7, and 4.5 um in Comparative Example 8 in a similar manner as in Example 1 except that raw material formulations were the raw material formulations in Table 2-1 and film formation conditions were the film formation conditions shown in Table 2-2, but none of the films could be formed due to film breakage. Accordingly, film characteristics and capacitor characteristics could not be evaluated, and thus columns of the relevant items in Table 2-2 are indicated by oblique lines.

(Comparative Example 9)

A polypropylene film was obtained in a similar manner as in Comparative Example 2 except that raw material formulations were the raw material formulations in Table 2-1 and film formation conditions were the film formation conditions shown in Table 2-2. Evaluation results are shown in Table 2-2.

(Example C1)

Aluminum was vapor-deposited on the polypropylene film obtained in Example 2 on a surface thereof which had been subjected to the corona discharge treatment with the vacuum deposition machine manufactured by ULVAC, Inc. at a film resistance of 20 Ω/sq. During the vapor deposition, there were produced a deposited film C1A with a deposition pattern having a so-called T-shaped margin (pitch (period) in the machine direction of 17 mm, and fuse width of 0.5 mm) in which a margin portion was disposed in a direction perpendicular to the machine direction by the masking oil, and a deposited film C1B without the deposition pattern having the T-shaped margin, respectively. The deposited films C1A and C1B were slit respectively to obtain deposition reels C1A and C1B having a film width of 50 mm (end margin width of 2 mm). Next, the capacitor element was wound such that the deposition reels C1A and C1B were alternately overlapped and finished as a capacitor element having element capacitance of 10 μF with the element winding machine (KAW-4NHB) manufactured by KAIDO MFG. CO., LTD., subjected to the metallikon, and then subjected to the heat treatment at a temperature of 128°C for 12 hours under a reduced pressure, a lead wire was attached to finish the capacitor element. Evaluation results of the obtained capacitor element are shown in Table 3. A capacitor element having a high rated voltage was obtained while keeping the element size extremely small.

(Example C2, Comparative Example C1, and Comparative Example C2)

Capacitor elements were obtained in a similar manner as in Example C1 except that the films shown in Table 3 were used. The capacitor element obtained in Example C2 was a capacitor element having a high rated voltage while keeping the element size small. The capacitor element obtained in Comparative Example C1 was a capacitor element having a high rated voltage but a large element size, and poor in practical performance. The capacitor element obtained in Comparative Example C2 was a capacitor element having a small element size but a low rated voltage, and poor in practical performance.

[Table 1-1-1]

| | | | Item | | Example 1 | Example 2 | Example 3 | Example 4 |
|---|---|---|---|---|---|---|---|---|
| Raw material formulation | Layer B | Homopolypropylene | Polypropylene resin 1 | (parts by mass) | – | 70.0 | – | – |
| | | | Polypropylene resin 2 | (parts by mass) | 50.0 | – | 90.0 | 95.0 |
| | | | Polypropylene resin 4 | (parts by mass) | – | – | – | – |
| | | Raw material obtained by pre-kneading branched polypropylene | Raw material (D1) | (parts by mass) | – | 30.0 | – | – |
| | | | Raw material (D2) | (parts by mass) | 50.0 | – | 10.0 | 5.0 |
| | | Content of branched polypropylene | | (mass%) | 5.0 | 3.0 | 1.0 | 0.5 |
| | Layer A | Homopolypropylene | Polypropylene resin 1 | (parts by mass) | – | 34.6 | – | – |
| | | | Polypropylene resin 2 | (parts by mass) | 64.6 | – | 24.6 | – |
| | | | Polypropylene resin 3 | (parts by mass) | – | – | – | – |
| | | | Polypropylene resin 4 | (parts by mass) | – | – | – | 2.6 |
| | | Raw material obtained by pre-kneading cyclic olefin resin | Raw material (A1) | (parts by mass) | – | 65.0 | – | – |
| | | | Raw material (A2-1) | (parts by mass) | 35.0 | – | – | – |
| | | | Raw material (A2-2) | (parts by mass) | – | – | 75.0 | – |
| | | | Raw material (A3) | (parts by mass) | – | – | – | – |
| | | | Raw material (A4) | (parts by mass) | – | 3.3 | – | 97.0 |
| | | | Raw material (A5) | (parts by mass) | – | – | – | – |
| | Cyclic olefin resin (C1) | | | (parts by mass) | – | – | – | – |
| | Cyclic olefin resin (C2) | | | (parts by mass) | – | – | – | – |
| | Antioxidant | | | (parts by mass) | 0.4 | 0.4 | 0.4 | 0.4 |
| | Pre-kneading of raw material | | | – | Yes | Yes | Yes | Yes |
| | Content of cyclic olefin resin in entire film | | | (mass%) | 9 | 16 | 27 | 35 |

[Table 1-1-2]

| Item | | | | Example 5 | Example 6 | Example 7 | Example 8 |
|---|---|---|---|---|---|---|---|
| Raw material formulation | Layer B | Homopolypropylene | Polypropylene resin 1 (parts by mass) | – | – | – | – |
| | | | Polypropylene resin 2 (parts by mass) | 100.0 | – | – | 50.0 |
| | | | Polypropylene resin 4 (parts by mass) | – | – | – | – |
| | | Raw material obtained by pre-kneading branched polypropylene | Raw material (D1) (parts by mass) | – | – | – | – |
| | | | Raw material (D2) (parts by mass) | – | – | – | 50.0 |
| | | Content of branched polypropylene | (mass%) | – | – | – | 5.0 |
| | Layer A | Homopolypropylene | Polypropylene resin 1 (parts by mass) | – | – | – | – |
| | | | Polypropylene resin 2 (parts by mass) | 31.6 | 89.6 | 75.6 | 71.6 |
| | | | Polypropylene resin 3 (parts by mass) | – | – | – | – |
| | | | Polypropylene resin 4 (parts by mass) | – | – | – | – |
| | | Raw material obtained by pre-kneading cyclic olefin resin | Raw material (A1) (parts by mass) | – | – | – | – |
| | | | Raw material (A2-1) (parts by mass) | 68.0 | – | 18.0 | 28.0 |
| | | | Raw material (A2-2) (parts by mass) | – | – | – | – |
| | | | Raw material (A3) (parts by mass) | – | 10.0 | – | – |
| | | | Raw material (A4) (parts by mass) | – | – | – | – |
| | | | Raw material (A5) (parts by mass) | – | – | – | – |
| | | Cyclic olefin resin (C1) | (parts by mass) | – | – | – | – |
| | | Cyclic olefin resin (C2) | (parts by mass) | – | – | – | – |
| | | Antioxidant | (parts by mass) | 0.4 | 0.4 | 0.4 | 0.4 |
| | | Pre-kneading of raw material | - | Yes | Yes | Yes | Yes |
| | Content of cyclic olefin resin in entire film | | (mass%) | 17 | 3 | 5 | 8 |

[Table 1-2-1]

| Item | | | Example 1 | Example 2 | Example 3 | Example 4 |
|---|---|---|---|---|---|---|
| Film formation condition | Multi-layer configuration | - | B/A/B | B/A/B | B/A/B | B/A/B |
| | Lamination ratio | - | 1/10/1 | 1/10/1 | 1/8/1 | 1/8/1 |
| | Casting drum temperature | (°C) | 90 | 30 | 90 | 90 |
| | Longitudinal stretch ratio | (Times) | 5.4 | 4.8 | 4.3 | 4.2 |
| | Longitudinal stretching temperature | (°C) | 155 | 157 | 154 | 152 |
| | Lateral stretch ratio | (Times) | 10.4 | 10 | 9.7 | 9.8 |
| | Area stretch ratio | (Times) | 56.2 | 48.0 | 41.7 | 41.2 |
| | Transverse preheating temperature | (°C) | 188 | 190 | 190 | 185 |
| | Lateral stretching temperature | (°C) | 182 | 184 | 182 | 180 |
| | Heat treatment temperature | (°C) | 175 | 175 | 177 | 170 |
| | Relaxation treatment | (%) | 10 | 11 | 10 | 8 |
| Film characteristics | Film thickness | (μm) | 3.1 | 3.0 | 3.8 | 3.6 |
| | F(A23) + F(B23) | (MPa) | 430 | 380 | 340 | 330 |
| | Thermal shrinkage rate at 150°C in main orientation direction | (%) | -0.9 | 0.1 | 0.6 | 1.5 |
| | Thermal shrinkage rate at 150°C in main orientation orthogonal direction | (%) | -0.1 | -0.1 | 1.1 | 4.2 |
| | Total light transmittance | (%) | 96 | 91 | 88 | 86 |
| | Number of domains of cyclic olefin resin passing through pair of short sides in rectangle in size of 1 μm * 2 μm | (number) | 8 | 5 | 1 | 1 |
| | Developed area ratio Sdr — Surface 1 | (%) | 0.011 | 0.021 | 0.030 | 0.042 |
| | Developed area ratio Sdr — Surface 2 | (%) | 0.012 | 0.022 | 0.031 | 0.044 |
| | Dielectric breakdown voltage measured at 135°C | (V/μm) | 440 | 400 | 320 | 310 |
| | Temperature-falling crystallization temperature (Tmc) of film | (°C) | 118 | 117 | 113 | 111 |
| | Thickness unevenness in machine direction | (%) | 4 | 7 | 11 | 14 |
| Capacitor characteristics in atmosphere of 135°C Film formability processability | Withstand voltage | | S | A | C | C |
| | Reliability | | S | A | B | C |
| | Film formability | | B | B | A | A |
| | Processability | | A | A | A | B |

[Table 1-2-2]

| | Item | | Example 5 | Example 6 | Example 7 | Example 8 |
|---|---|---|---|---|---|---|
| Film formation condition | Multi-layer configuration | - | B/A/B | Only layer A | Only layer A | B/A/B |
| | Lamination ratio | - | 1/10/1 | - | - | 1/10/1 |
| | Casting drum temperature | (°C) | 90 | 90 | 90 | 90 |
| | Longitudinal stretch ratio | (Times) | 5.3 | 4.3 | 5.1 | 5.4 |
| | Longitudinal stretching temperature | (°C) | 154 | 152 | 155 | 155 |
| | Lateral stretch ratio | (Times) | 10.2 | 9.6 | 9.9 | 10.8 |
| | Area stretch ratio | (Times) | 54.1 | 41.3 | 50.5 | 58.3 |
| | Transverse preheating temperature | (°C) | 175 | 185 | 185 | 188 |
| | Lateral stretching temperature | (°C) | 167 | 180 | 180 | 182 |
| | Heat treatment temperature | (°C) | 162 | 170 | 170 | 175 |
| | Relaxation treatment | (%) | 8 | 10 | 10 | 10 |
| Film characteristics | Film thickness | (μm) | 4.2 | 3.6 | 3.8 | 3.2 |
| | F(A23) + F(B23) | (MPa) | 440 | 340 | 420 | 450 |
| | Thermal shrinkage rate at 150°C in main orientation direction | (%) | 2.4 | 1.5 | -0.9 | -0.9 |
| | Thermal shrinkage rate at 150°C in main orientation orthogonal direction | (%) | 5.2 | 5.1 | -0.1 | 0.0 |
| | Total light transmittance | (%) | 81 | 80 | 96 | 96 |
| | Number of domains of cyclic olefin resin passing through pair of short sides in rectangle in size of 1 μm * 2 μm | (number) | 7 | 1 | 8 | 7 |
| | Developed area ratio Sdr — Surface 1 | (%) | 0.046 | 0.00086 | 0.001 | 0.01 |
| | Developed area ratio Sdr — Surface 2 | (%) | 0.011 | 0.00099 | 0.0012 | 0.012 |
| | Dielectric breakdown voltage measured at 135°C | (V/μm) | 430 | 310 | 420 | 450 |
| | Temperature-falling crystallization temperature (Tmc) of film | (°C) | 108 | 108 | 108 | 118 |
| | Thickness unevenness in machine direction | (%) | 5 | 14 | 5 | 4 |
| Capacitor characteristics in atmosphere of 135°C Film formability processability | | Withstand voltage | S | C | S | S |
| | | Reliability | C | C | B | S |
| | | Film formability | C | B | C | S |
| | | Processability | B | C | C | A |

[Table 2-1-1]

| | | Item | | Comparative Example 1 | Comparative Example 2 | Comparative Example 3 | Comparative Example 4 | Comparative Example 5 |
|---|---|---|---|---|---|---|---|---|
| Raw material formulation | Layer B | Homopolypropylene | Polypropylene resin 1 (parts by mass) | – | – | – | – | – |
| | | | Polypropylene resin 2 (parts by mass) | – | – | 100.0 | 100.0 | – |
| | | | Polypropylene resin 4 (parts by mass) | – | – | – | – | – |
| | | Raw material obtained by pre-kneading branched polypropylene | Raw material (D1) (parts by mass) | – | – | – | – | – |
| | | | Raw material (D2) (parts by mass) | – | – | – | – | – |
| | | Content of branched polypropylene | (mass%) | – | – | – | – | – |
| | Layer A | Homopolypropylene | Polypropylene resin 1 (parts by mass) | – | – | – | – | – |
| | | | Polypropylene resin 2 (parts by mass) | – | – | 66.6 | – | 64.6 |
| | | | Polypropylene resin 3 (parts by mass) | 100.0 | – | – | – | – |
| | | | Polypropylene resin 4 (parts by mass) | – | 79.6 | – | – | – |
| | | Raw material obtained by pre-kneading cyclic olefin resin | Raw material (A1) (parts by mass) | – | – | – | – | – |
| | | | Raw material (A2-1) (parts by mass) | – | – | – | – | 35.0 |
| | | | Raw material (A2-2) (parts by mass) | – | – | – | – | – |
| | | | Raw material (A3) (parts by mass) | – | – | – | – | – |
| | | | Raw material (A4) (parts by mass) | – | – | – | – | – |
| | | | Raw material (A5) (parts by mass) | – | – | – | – | – |
| | Cyclic olefin resin (C1) | | (parts by mass) | – | 20.0 | 33.0 | 99.6 | – |
| | Cyclic olefin resin (C2) | | (parts by mass) | – | – | – | – | – |
| | Antioxidant | | (parts by mass) | – | 0.4 | 0.4 | 0.4 | 0.4 |
| | Pre-kneading of raw material | | – | No | No | No | No | Yes |
| | Content of cyclic olefin resin in entire film | | (mass%) | 0 | 20 | 33 | 33 | 11 |

[Table 2-1-2]

| | | Item | | Comparative Example 6 | Comparative Example 7 | Comparative Example 8 | Comparative Example 9 |
|---|---|---|---|---|---|---|---|
| Raw material formulation | Layer B | Homopolypropylene | Polypropylene resin 1 (parts by mass) | – | – | – | – |
| | | | Polypropylene resin 2 (parts by mass) | 100.0 | 100.0 | 100.0 | – |
| | | | Polypropylene resin 4 (parts by mass) | – | – | – | – |
| | | Raw material obtained by pre-kneading branched polypropylene | Raw material (D1) (parts by mass) | – | – | – | – |
| | | | Raw material (D2) (parts by mass) | – | – | – | – |
| | | Content of branched polypropylene | (mass%) | – | – | – | – |
| | Layer A | Homopolypropylene | Polypropylene resin 1 (parts by mass) | – | – | – | – |
| | | | Polypropylene resin 2 (parts by mass) | 26.6 | 69.6 | 94.6 | – |
| | | | Polypropylene resin 3 (parts by mass) | – | – | – | – |
| | | | Polypropylene resin 4 (parts by mass) | – | – | – | 79.6 |
| | | Raw material obtained by pre-kneading cyclic olefin resin | Raw material (A1) (parts by mass) | – | – | – | – |
| | | | Raw material (A2-1) (parts by mass) | – | – | – | – |
| | | | Raw material (A2-2) (parts by mass) | – | – | – | – |
| | | | Raw material (A3) (parts by mass) | – | – | – | – |
| | | | Raw material (A4) (parts by mass) | – | – | – | – |
| | | | Raw material (A5) (parts by mass) | 73.0 | – | – | – |
| | Cyclic olefin resin (C1) | | (parts by mass) | – | 30.0 | – | 20.0 |
| | Cyclic olefin resin (C2) | | (parts by mass) | – | – | 5.0 | – |
| | Antioxidant | | (parts by mass) | 0.4 | 0.4 | 0.4 | 0.4 |
| | Pre-kneading of raw material | | – | Yes | No | No | No |
| | Content of cyclic olefin resin in entire film | | (mass%) | 28 | 30 | 5 | 20 |

[Table 2-2-1]

| | Item | | Comparative Example 1 | Comparative Example 2 | Comparative Example 3 | Comparative Example 4 | Comparative Example 5 |
|---|---|---|---|---|---|---|---|
| Film formation condition | Multi-layer configuration | - | Only layer A | Only layer A | B/A/B | B/A/B | Only layer A |
| | Lamination ratio | - | - | - | 1/12/1 | 1/1/1 | - |
| | Casting drum temperature | (°C) | 90 | 90 | 30 | 70 | 30 |
| | Longitudinal stretch ratio | (Times) | 5.2 | 3.6 | 3.8 | 3.3 | - |
| | Longitudinal stretching temperature | (°C) | 147 | Simultaneous biaxial 163 | 154 | 146 | - |
| | Lateral stretch ratio | (Times) | 9.5 | 8.2 | 8.1 | 10.5 | - |
| | Area stretch ratio | (Times) | 49.4 | 29.5 | 30.8 | 34.7 | - |
| | Transverse preheating temperature | (°C) | 168 | Simultaneous biaxial 163 | 165 | 167 | - |
| | Lateral stretching temperature | (°C) | 165 | Simultaneous biaxial 163 | 165 | 167 | - |
| | Heat treatment temperature | (°C) | 163 | - | 153 | 150 | - |
| | Relaxation treatment | (%) | 10 | - | 8 | 10 | - |
| Film characteristics | Film thickness | (μm) | 6.2 | 6 | 3.8 | 3.5 | 25 |
| | F(A23) + F(B23) | (MPa) | 400 | 210 | 270 | 280 | 90 |
| | Thermal shrinkage rate at 150°C in main orientation direction | (%) | 8.5 | 4.3 | 3.4 | 4.1 | 0.5 |
| | Thermal shrinkage rate at 150°C in main orientation orthogonal direction | (%) | 6.3 | 2.1 | 1.1 | 1.8 | 1.1 |
| | Total light transmittance | (%) | 93 | 83 | 82 | 86 | 70 |
| | Number of domains of cyclic olefin resin passing through pair of short sides in rectangle in size of 1 μm * 2 μm | (number) | 0 | 0 | 0 | 0 | 0 |
| | Developed area ratio Sdr — Surface 1 | (%) | 0.000052 | 0.00082 | 0.00091 | 0.000065 | 0.000054 |
| | Developed area ratio Sdr — Surface 2 | (%) | 0.000054 | 0.00088 | 0.00094 | 0.000078 | 0.000065 |
| | Dielectric breakdown voltage measured at 135°C | (V/μm) | 230 | 290 | 310 | 320 | 180 |
| | Temperature-falling crystallization temperature (Tmc) of film | (°C) | 107 | 108 | 108 | 108 | 108 |
| | Thickness unevenness in machine direction | (%) | 2 | 24 | 18 | 21 | 27 |
| Capacitor characteristics in atmosphere of 135°C Film formability processability | Withstand voltage | | D | D | C | C | D |
| | Reliability | | D | D | D | D | D |
| | Film formability | | A | C | C | C | A |
| | Processability | | A | D | C | C | D |

[Table 2-2-2]

| | Item | | Comparative Example 6 | Comparative Example 7 | Comparative Example 8 | Comparative Example 9 |
|---|---|---|---|---|---|---|
| Film formation condition | Multi-layer configuration | - | B/A/B | B/A/B | B/A/B | Only layer A |
| | Lamination ratio | - | 1/12/1 | 1/12/1 | 1/12/1 | - |
| | Casting drum temperature | (°C) | 30 | 30 | 30 | 90 |
| | Longitudinal stretch ratio | (Times) | 5.1 | 4.3 | 5.5 | 3.6 |
| | Longitudinal stretching temperature | (°C) | 130 | 155 | 130 | Simultaneous biaxial 163 |
| | Lateral stretch ratio | (Times) | 10.3 | 9.5 | 8.1 | 8.2 |
| | Area stretch ratio | (Times) | 52.5 | 40.9 | 44.6 | 29.5 |
| | Transverse preheating temperature | (°C) | 160 | 160 | 160 | Simultaneous biaxial 163 |
| | Lateral stretching temperature | (°C) | 160 | 160 | 160 | Simultaneous biaxial 163 |
| | Heat treatment temperature | (°C) | 140 | 150 | 150 | - |
| | Relaxation treatment | (%) | 15 | 10 | 10 | - |
| Film characteristics | Film thickness | (μm) | | | | 4.5 |
| | F(A23) + F(B23) | (MPa) | | | | 200 |
| | Thermal shrinkage rate at 150°C in main orientation direction | (%) | | | | 4.2 |
| | Thermal shrinkage rate at 150°C in main orientation orthogonal direction | (%) | | | | 2.2 |
| | Total light transmittance | (%) | | | | 83 |
| | Number of domains of cyclic olefin resin passing through pair of short sides in rectangle in size of 1 μm * 2 μm | (number) | | | | 0 |
| | Developed area ratio Sdr — Surface 1 | (%) | | | | 0.0006 |
| | Developed area ratio Sdr — Surface 2 | (%) | | | | 0.0008 |
| | Dielectric breakdown voltage measured at 135°C | (V/μm) | | | | 270 |
| | Temperature-falling crystallization temperature (Tmc) of film | (°C) | | | | 108 |
| | Thickness unevenness in machine direction | (%) | | | | 26 |
| Capacitor characteristics in atmosphere of 135°C Film formability processability | Withstand voltage | | | | | D |
| | Reliability | | | | | D |
| | Film formability | | | | | C |
| | Processability | | | | | D |

[Table 3]

| Item | | Example C1 | Example C2 | Comparative Example C1 | Comparative Example C2 |
|---|---|---|---|---|---|
| Film used | - | Example 2 | Example 5 | Comparative Example 2 | Comparative Example 9 |
| Film thickness | (μm) | 3.0 | 4.2 | 6.0 | 4.5 |
| Withstand voltage | (kV) | 0.80 | 1.10 | 0.90 | 0.50 |
| Capacitance density | (μF/cm³) | 2.0 | 1.0 | 0.49 | 0.87 |
| Evaluation of film capacitor performance | Service life | B | A | B | C |
| | Element size | A | B | C | B |

## INDUSTRIAL APPLICABILITY

The polypropylene film of the present invention can be widely used in industrial applications such as film capacitor applications, packaging applications, mold release applications, and tape applications, and can be suitably used in film capacitor applications used under high temperatures and high voltages because the film is particularly excellent in voltage resistance characteristics and reliability in a high-temperature environment.

DESCRIPTION OF REFERENCE SIGNS

1: Part of section X
2: Sea portion
3: Island portion (domain)
4: Rectangle having size of 1 um * 2 um defined such that pair of short sides is parallel to thickness direction in section X
5: Pair of short sides parallel to thickness direction

**Claims**

1. A polypropylene film comprising a cyclic olefin resin, wherein in a case where a strength in a main orientation direction measured at 23°C is F(A23) and a strength in a main orientation orthogonal direction measured at 23°C is F(B23), F(A23) + F(B23) is 120 MPa or more and 1000 MPa or less, and a shrinkage rate in the main orientation direction measured at 150°C is -2.0% or more and 3.0% or less.

2. The polypropylene film according to claim 1, wherein at least one surface of the polypropylene film has a developed area ratio Sdr of 0.002% or more and 0.050% or less.

3. The polypropylene film according to claim 1 or 2, comprising at least one layer (layer A) containing the cyclic olefin resin and a polypropylene resin, wherein in a case where a section obtained by cutting the layer A along a plane parallel to the main orientation direction and a thickness direction is set as a section X, there are two or more domains of the cyclic olefin resin passing through a pair of short sides in a rectangle in a size of 1 um * 2 um defined in the section X in a manner that the pair of short sides are parallel to the thickness direction.

4. The polypropylene film according to any one of claims 1 to 3, wherein the polypropylene film has a dielectric breakdown voltage measured at 135°C of more than 325 V/um and 900 V/um or less.

5. The polypropylene film according to any one of claims 1 to 4, wherein the polypropylene film has a thickness of 0.50 um or more and 5.5 um or less.

6. The polypropylene film according to any one of claims 1 to 5, wherein a shrinkage rate of the film in the main orientation orthogonal direction measured at 150°C is -2.0% or more and 4.0% or less.

7. The polypropylene film according to any one of claims 1 to 6, comprising the cyclic olefin resin having a glass transition temperature of 125°C or more and 175°C or less.

8. The polypropylene film according to any one of claims 1 to 7, wherein the polypropylene film has a total light transmittance of 85% or more and 99.9% or less.

9. The polypropylene film according to any one of claims 1 to 8, wherein the polypropylene film has a temperaturefalling crystallization temperature (Tmc) of 110°C or more as measured by differential scanning calorimetry.

10. The polypropylene film according to any one of claims 1 to 9, wherein the polypropylene film has a thickness unevenness in a machine direction of 0.001% or more and 15% or less.

11. A metal membrane layered film comprising a metal membrane on at least one surface of the polypropylene film according to any one of claims 1 to 10.

12. A film capacitor comprising the metal membrane layered film according to claim 11.

13. The film capacitor according to claim 12, wherein the film capacitor has a capacitance density of 1.1 $\mu$F/cm$^3$ or more and 18 $\mu$F/cm$^3$ or less.

**14.** The film capacitor according to claim 12 or 13, wherein the film capacitor has a withstand voltage at 135°C of 0.60 kV or more.

**15.** A power control unit comprising the film capacitor according to any one of claims 12 to 14.

**16.** A motor vehicle comprising the power control unit according to claim 15.

**17.** An electric aircraft comprising the power control unit according to claim 15.

**18.** A packaging material comprising the polypropylene film according to any one of claims 1 to 10.

Fig. 1

Fig. 2

# INTERNATIONAL SEARCH REPORT

International application No.

**PCT/JP2022/046637**

## A. CLASSIFICATION OF SUBJECT MATTER

**C08J 5/18**(2006.01)i; **B32B 15/08**(2006.01)i; **B32B 27/32**(2006.01)i; **H01G 4/32**(2006.01)i
FI:   C08J5/18 CES; B32B15/08 Q; B32B27/32 Z; H01G4/32 511L

According to International Patent Classification (IPC) or to both national classification and IPC

## B. FIELDS SEARCHED

Minimum documentation searched (classification system followed by classification symbols)

C08J5/00-5/02; C08J5/12-5/22; B32B1/00-43/00; H01G4/00-4/40; H01G13/00-13/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP 2022-35487 A (TORAY IND., INC.) 04 March 2022 (2022-03-04)<br>entire text | 1-18 |
| A | JP 6992929 B1 (TORAY IND., INC.) 13 January 2022 (2022-01-13)<br>entire text | 1-18 |
| A | WO 2021/070672 A1 (TORAY IND., INC.) 15 April 2021 (2021-04-15)<br>entire text | 1-18 |
| A | JP 2020-521867 A (TOPAS ADVANCED POLYMERS GMBH) 27 July 2020 (2020-07-27)<br>entire text | 1-18 |
| A | JP 2020-520127 A (TDK ELECTRONICS AG) 02 July 2020 (2020-07-02)<br>entire text | 1-18 |
| A | WO 2016/175331 A1 (OJI HOLDINGS CORP.) 03 November 2016 (2016-11-03)<br>entire text | 1-18 |
| A | WO 2021/176930 A1 (PRIME POLYMER CO., LTD.) 10 September 2021 (2021-09-10)<br>entire text | 1-18 |

☑ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 February 2023** | **28 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 502 018 A1

**INTERNATIONAL SEARCH REPORT**

International application No.

**PCT/JP2022/046637**

## C. DOCUMENTS CONSIDERED TO BE RELEVANT

| Category* | Citation of document, with indication, where appropriate, of the relevant passages | Relevant to claim No. |
|---|---|---|
| E, A | WO 2022/270577 A1 (TORAY IND., INC.) 29 December 2022 (2022-12-29) paragraphs [0036]-[0040], [0065], [0071]-[0077], [0085]-[0111], examples 1, 5-7, 9-10, table 1 | 1-18 |
| P, A | JP 7188651 B1 (TORAY IND., INC.) 13 December 2022 (2022-12-13) entire text | 1-18 |

Form PCT/ISA/210 (second sheet) (January 2015)

37

**INTERNATIONAL SEARCH REPORT**
**Information on patent family members**

International application No.

**PCT/JP2022/046637**

| Patent document cited in search report | | | Publication date (day/month/year) | Patent family member(s) | | | Publication date (day/month/year) |
|---|---|---|---|---|---|---|---|
| JP | 2022-35487 | A | 04 March 2022 | (Family: none) | | | |
| JP | 6992929 | B1 | 13 January 2022 | WO | 2021/166994 | A1 | |
| | | | | CN | 114981344 | A | |
| | | | | KR | 10-2022-0144363 | A | |
| WO | 2021/070672 | A1 | 15 April 2021 | CN | 114502374 | A | |
| | | | | KR | 10-2022-0080081 | A | |
| | | | | TW | 202115164 | A | |
| JP | 2020-521867 | A | 27 July 2020 | US entire text | 2021/0147645 | A1 | |
| | | | | WO | 2018/197034 | A1 | |
| | | | | EP | 3615597 | A1 | |
| | | | | CN | 110546190 | A | |
| | | | | KR | 10-2020-0086222 | A | |
| JP | 2020-520127 | A | 02 July 2020 | US entire text | 2021/0079179 | A1 | |
| | | | | WO | 2018/210854 | A1 | |
| | | | | EP | 3625811 | A1 | |
| WO | 2016/175331 | A1 | 03 November 2016 | EP entire text | 3291265 | A1 | |
| | | | | KR | 10-2017-0118854 | A | |
| | | | | CN | 107533917 | A | |
| | | | | KR | 10-2019-0109582 | A | |
| | | | | CN | 111292962 | A | |
| WO | 2021/176930 | A1 | 10 September 2021 | CN | 115210833 | A | |
| | | | | KR | 10-2022-0134612 | A | |
| WO | 2022/270577 | A1 | 29 December 2022 | (Family: none) | | | |
| JP | 7188651 | B1 | 13 December 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015012076 A
- WO 2017022706 A
- JP 2018034510 A
- JP 2020521867 A

### Non-patent literature cited in the description

- **MOTONOBU KAWAI**. Film Capacitor Breakthrough, from Car to Energy. *NIKKEI ELECTRONICS, Nikkei BP*, 17 September 2012, 57-62